(19)

Europäisches Patentamt
European Patent Office
Office européen des brevets

(11) **EP 4 064 133 A2**

(12) **EUROPEAN PATENT APPLICATION**

(43) Date of publication:
**28.09.2022 Bulletin 2022/39**

(21) Application number: **22162546.0**

(22) Date of filing: **16.03.2022**

(51) International Patent Classification (IPC):
***G06N 3/04*** *(2006.01)*　　　***G06N 3/063*** *(2006.01)*
***G06T 3/40*** *(2006.01)*

(52) Cooperative Patent Classification (CPC):
**G06N 3/04; G06N 3/063; G06T 3/4053**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.03.2021 GR 20210100188**

(71) Applicant: **Samsung Electronics Co., Ltd.**
**Gyeonggi-do, 16677 (KR)**

(72) Inventors:
 • **VENIERIS, Stylianos I.**
　**Chertsey (GB)**
 • **ALMEIDA, Mario**
　**Chertsey (GB)**
 • **LEE, Royson**
　**Chertsey (GB)**

(74) Representative: **Appleyard Lees IP LLP**
**15 Clare Road**
**Halifax HX1 2HY (GB)**

(54) **METHOD FOR OPTIMISING A MACHINE LEARNING MODEL FOR IMAGE PROCESSING**

(57)　Broadly speaking, the present techniques generally relate to a computer-implemented method for optimising a neural network to perform image processing (e.g. super-resolution) on resource-constrained devices.

FIG. 1

EP 4 064 133 A2

**Description**

**Field**

The present application generally relates to a method for performing image processing, and in particular to a computer-implemented method for optimising a machine learning, ML, model or neural network to perform image processing on resource-constrained devices.

**Background**

With the rapid rise of Internet content delivery services and devices that support the transmission of higher resolution content, images and videos are predicted to account for 82% of global Internet traffic. Mobile applications, in particular, constitute a great proportion of this growth, as services such as live streaming, video-conferencing, and video-on-demand have been on the rise. For instance, popular video application TikTok has over 50 million daily users and has seen a 55% increase in unique users and a 93.7% increase in the average time spent per user in just six months. Additionally, with more than half of the USA's Gen Z population on Snapchat, the application reached 249 million daily users in Q3 of 2020, resulting in a 50% growth of daily time spent watching content year-over-year. Therefore, in order to meet these demands, existing mobile systems are required to maximize both the user satisfaction and their quality of experience (QoE).

A primary challenge of this class of mobile systems is their sensitivity to networking conditions. Due to the large amount of transferred data and the stringent latency constraints, the quality of the communication channel between client and server plays a key role in satisfying the application-level performance needs. Nevertheless, in real-world cellular (mobile) networks, the network speed fluctuates substantially, and poor connectivity conditions lead to excessive response times, dropped frames or video stalling, that rapidly degrade the QoE. This phenomenon is further aggravated by the increasing number of users which compete for the same pool of network resources and create contention.

For many years, adaptive bitrate (ABR) has been the dominant approach to remedy this situation, ending up in large-scale deployments, such as Netflix, YouTube, and Hulu. Adaptive bitrate (ABR) methods typically operate by considering either the network speed or the playback buffer state and selecting accordingly the bitrate of the downloaded media, either in a per-segment manner for videos or per frame for images. Although ABR approaches have boosted the performance of existing content delivery systems, there is still a substantial room to further optimize the bandwidth usage.

A recent key method with the potential to push beyond ABR's performance is neural enhancement, enabled through super-resolution (SR) deep neural networks (DNNs). SR DNNs operate by processing a low-resolution, degraded image and automatically generating a high-quality, high-resolution output, allowing low-quality content to be transmitted across the network, at the expense of additional computation at the receiver's end. Hence, neural enhancement removes the system's sole reliance on the network and opens up a new dimension in the design space by introducing a trade-off between the use of network and computational resources. Naturally, these approaches can be utilized alongside image and video compression techniques and ABR algorithms, resulting in their integration in a plethora of content delivery systems.

Even so, deploying these neural enhancement-based techniques on mobile devices still remains an active challenge. Despite the increasing computational capacity of mobile devices, executing SR models is still excessively demanding with respect to both workload and memory. For instance, due to the upscaling nature of SR models, the number of Multiply-Add operations required even for efficient mobile-tailored efficient SR models is orders of magnitude larger than their discriminative counterparts. In order to counteract the excessive computational requirements, existing systems 1) rely on floating-point implementations, such as assuming the availability of a desktop GPU client, 2) require the use of all available processors (CPU, GPU, DSP) in parallel, 3) leverage frame dependencies in order cache previously upscaled results, or 4) resort to cloud offloading.

Nevertheless, these solutions are either limited in each deployment setting, and thus cannot accommodate a wide range of heterogeneous low-end devices, or introduce additional challenges as a by-product. Specifically, using multiple compute engines in parallel can result in thermal throttling issues, and cached-based solutions can lead to a drastic drop in visual quality. More importantly, offloading solutions exacerbate the bandwidth usage, defeating the purpose of utilizing these models.

Therefore, the present applicant has recognised the need for improved techniques that enable the use of image processing models on mobile devices without incurring any of the above-mentioned drawbacks.

**Summary**

Broadly speaking, the present techniques provide a framework that enables machine learning, ML, models that perform image processing to be optimised for deployment on resource-constrained devices. The ML models may be used for any generative image processing tasks, i.e. models that take an image as an input and output an image. The image processing performed by the ML model may be, for example, super-resolution, image denoising, or image demosaicing. These ML models typically have the same types of architecture. Therefore, although the following description is focussed on super-resolution, it will be understood that the techniques described herein apply equally to image processing models that have a similar underlying architecture. In other words, the super-resolution example described herein is one example of a ML model that could be optimised.

The present techniques provide a framework that overcomes the above-mentioned limitations of existing on-device super-resolution (SR) systems and delivers fast, efficient and high-quality SR on mobile devices (i.e. smartphones or other resource-constrained devices). To optimise latency while meeting the user-specified quality constraints, the present techniques adopt an NPU-centric approach, introducing a novel hybrid-precision execution paradigm and a runtime neural image codec that exploit the multi-precision processing capabilities of modern mobile NPUs. Moreover, the present techniques provide a mechanism that selectively re-customises, on-the-fly, the arithmetic precision of the DNN layers, improving visual quality beyond existing NPU-based designs.

The present techniques provide a hybrid-precision execution scheme together with a methodology for optimising the deployment of SR DNNs to the latency and quality requirements of the target SR application. By considering the multiple precisions supported by a given NPU, the framework adapts each layer's wordlength (sometimes termed bitwidth in the art) through a single-shot optimisation algorithm, co-optimising the per-layer quantisation of the DNN and the scheduling of its layers on the NPU.

The present techniques provide a technique that identifies quantisation-sensitive layers and selectively applies adaptive arithmetic precision, to enhance them with wider representational power at run time. This technique dynamically adapts the quantisation parameters of a subset of layers in an input-dependent manner, leading to lower quantisation error and higher visual quality than previously attainable on mobile NPUs.

The present techniques provide a SR approach to exploit the multi-precision capabilities of the heterogeneous processing units that reside in NPUs. To this end, the present techniques provide a new neural image codec design comprising a hybrid-precision dispatcher and a run-time quantisation unit. The module is configured with the SR DNN-optimised hybrid-precision scheme and the associated execution schedule, delivering an average speed-up of 7.3x over existing on-device SR systems.

In a first approach of the present techniques, there is provided a computer-implemented method for optimising a neural network for implementation on a processing unit, the method comprising: obtaining a pre-trained neural network for performing image processing on images, the neural network comprising a plurality of layers; quantising an activations tensor of each layer of the pre-trained neural network using a uniform wordlength and a per-layer scale factor; determining, for each layer, whether to keep the activations tensor quantised using the uniform wordlength or to switch to using a new wordlength that is supported by the processing unit to quantise the activations tensor; and quantising, using the determined wordlength, the activations tensor of each layer, and thereby generating a hybrid-precision neural network optimised for implementation on the processing unit. The image processing performed by the pre-trained neural network may be, for example, super-resolution, image denoising, or image demosaicing.

As noted above, the present techniques may apply to any ML model that performs generative image processing tasks and has a similar architecture. Thus, the present techniques also provide a computer-implemented method for optimising a super-resolution deep neural network, for implementation on a processing unit, the method comprising: obtaining a pre-trained super-resolution deep neural network, DNN, for performing super-resolution on low resolution images, the DNN comprising a plurality of layers; quantising an activations tensor of each layer of the pre-trained DNN using a uniform wordlength and a per-layer scale factor; determining, for each layer, whether to keep the activations tensor quantised using the uniform wordlength or to switch to using a new wordlength that is supported by the processing unit to quantise the activations tensor; and quantising, using the determined wordlength, the activations tensor of each layer, and thereby generating a hybrid-precision DNN optimised for implementation on the processing unit.

In the method to optimise a neural network (e.g. a SR DNN), the step of quantising (all values of) an activations tensor of each layer using the uniform wordlength may comprise deriving, for each layer, a scale factor based on an estimated dynamic range of the activations tensor for the layer. That is, an appropriate, per-layer scale factor may be derived for each layer based on the estimated dynamic range.

The method to optimise a neural network (e.g. a super-resolution, SR, deep neural network, DNN) may further comprise obtaining a user-defined minimum quality threshold value for the super-resolution, and using the minimum quality threshold value to determine whether to keep using the uniform wordlength or to switch to using a new wordlength to quantise the activations tensor of each layer. The minimum quality threshold, also referred to herein as a quality metric, may be user-defined and may specify a quality drop tolerance in any image distortion that results from performing the upscaling of a low-resolution image. The minimum quality threshold value may vary based on the type of low-resolution images that are being upscaled or on how the upscaled versions of the low-resolution images are to be viewed by a user. For example, display devices, such as televisions or smartphones, may be used to watch content (such as movies and TV programmes) on-demand, to stream content live/in real-time, and to participate in video-conferencing or video calls. However, it may be more efficient in terms of bandwidth, network usage, and mobile data usage, for such display devices to obtain low-resolution images that can be upscaled on the device. The user may therefore, for example, specify different minimum quality threshold values for movies and video calls, because they want to watch a movie in high definition, but do not mind if the video call has some image distortions.

The method to optimise a neural network (e.g. an SR DNN) may further comprise determining a computational cost in terms of a number of bit operations (BOPs) associated with each layer. In this case, determining whether to keep the uniform wordlength or switch to a new wordlength may comprise: prioritising quantisation of layers of the neural network (e.g. DNN) that have a high computational cost (i.e. execution cost). In other words, as explained in more detail below, a more aggressive quantisation may be applied to the most FLOPs-heavy layers of the neural network (e.g. DNN) first. This is advantageous because, by prioritising quantisation of higher-cost layers of the neural network/DNN (i.e. layers that are more computationally-expensive to run), it is ensured that a less computationally-expensive layer of the neural network/DNN is never quantised to lower precision at the expensive of a higher-cost layer. That is, the present techniques prioritise the quantisation of layers that will have a larger impact on minimising the runtime of the neural network/DNN.

Determining whether to keep the uniform wordlength or switch to a new wordlength may comprise: keeping the uniform wordlength or switching to a new wordlength by identifying, for each layer, which wordlength supported by the processing unit minimises the computational cost (i.e. execution cost) of an operation performed by the layer on the processing unit while maintaining the minimum quality threshold value.

The identifying may comprise: ordering each quantised layer (that has been quantised using the uniform wordlength and appropriate scale factor for the layer) based on the number of bit operations, BOPs, associated with the layer; temporarily adjusting the wordlength used to quantise the activations tensor of a I-th layer to a lower-precision wordlength; determining whether a minimum quality threshold value is satisfied; and setting the wordlength to quantise the activations tensor of the I-th layer to the lower-precision wordlength when the minimum quality threshold value is determined to be satisfied. It will be understood that when the minimum quality threshold value is determined not to be satisfied, the wordlength used to quantise the activations tensor of the I-th layer is restored to its original value.

The method may further comprising repeating the adjusting, determining and ordering steps for each layer of the neural network/DNN. In this way, the wordlength of each layer of the neural network/DNN is calibrated to enable the neural network/DNN to achieve the required super-resolution quality without increasing runtime.

The method may further comprise: identifying one or more quantised layers of the neural network/DNN to be further quantised at runtime. As explained in more detail below, there are some cases at runtime (inference time) where the hybrid-precision scheme fails to satisfy the quality constraint and leads to unacceptable quality drop. The present techniques therefore provide an additional design dimension to the quantisation strategy, named Dynamic Range Estimation (DRE). DRE adapts the scale factor and zero point of a given set of activations at runtime, based on the actual range of activation values for a particular, specific input sample. This means that the quantisation of the activations tensor of particular layers of the neural network/DNN may be determined and adjusted dynamically at runtime, so that the upscaling of a particular input low resolution image generates a super-resolution image of the required quality. Applying DRE across all layers of the neural network/DNN could lead to excessive latency at runtime and therefore, the present techniques provide a method to selectively apply DRE to a subset of the layers of the neural network/DNN.

Identifying one or more quantised layers of the neural network/DNN to be further quantised may comprise: determining a resilience of each quantised layer of the neural network/DNN to low (reduced) precision.

The idea is to isolate each layer's contribution to the quality drop of a quantised model, and then to recover the visual quality for the layers which exhibit the biggest quality drop (large quality degradation) when the layers are quantised. Thus, determining a resilience of each quantised layer may comprise: calculating a degradation in a peak signal-to-noise ratio value caused by each quantised layer; ordering each quantised layer in a list sorted by a decreasing order of degradation; calculating an energy concentration of a subset of quantised layers up to a I-th layer in the list; selecting one or more quantised layers up to the I-th layer that satisfy an energy concentration threshold; and specifying that the selected quantised layers will have their scale factors dynamically derived at runtime.

The method may comprise repeating the calculating, selecting and specifying steps for each quantised layer in the list.

In a second approach of the present techniques, there is provided a computer-implemented method for using an optimised neural network on a processing unit to perform image processing, the method comprising: obtaining an image to be processed; processing the image using a plurality of layers of the neural network, where each layer has a quantised activations tensor that is either pre-defined or determined using dynamic range estimation at run-time; and outputting a processed image.

When a layer processing the image has a quantised activations tensor that is pre-defined, the layer processes the image using the pre-defined quantised activations tensor.

When a layer processing the image has a quantised activations tensor that is determined at run-time, the method may comprise: calculating, using the image, a dynamic range of the activations tensor of the layer. The calculating may comprise extracting minimum and maximum values from an input tensor of the layer; and using the extracted minimum and maximum values to compute a new scale factor to be used to quantise the layer's input tensors (i.e. activations tensor). The method may further comprise quantising the input/activations tensor of the layer using the new scale factor derived using the calculated dynamic range. As explained below, a Run-time Quantization Unit (RQU), may perform the calculating and quantising steps. This is then used by the layer to process the image.

In a third approach of the present techniques, there is provided a computer-implemented method for using an optimised super-resolution deep neural network, DNN, on a processing unit to perform super-resolution, the method comprising: obtaining at least one low resolution image; and using the optimised DNN to: divide the low resolution image into fixed-size patches to be upscaled; upscale a resolution of each fixed-size patch using the optimised DNN, wherein each layer of the optimised DNN has a quantised activations tensor that is either pre-defined or determined using dynamic range estimation at run-time; concatenate the upscaled patches to form a super-resolution image; and output the super-resolution image.

Processing each fixed-size patch using the optimised DNN may comprise: partitioning the DNN into groups of consecutive layers based on an associated wordlength of each layer and whether the quantised activations tensors are pre-defined or determined at run-time; scheduling execution of partitions of the DNN that have layers with pre-defined quantised activations tensors without supervision; and scheduling execution of partitions of the DNN that have layers with quantised activations tensors determined at run-time, wherein the scheduling is monitored to quantise the activations tensors at runtime.

Quantising the activations tensors at runtime may comprise: extracting minimum and maximum values from an input tensor of each layer; and using the extracted minimum and maximum values to compute a quantisation for each layer.

In a fourth approach of the present techniques, there is provided an apparatus for using an optimised neural network on a processing unit to perform image processing, the apparatus comprising: at least one processing unit, coupled to memory, arranged for: obtaining an image to be processed; processing the image using a plurality of layers of the neural network, where each layer has a quantised activations tensor that is either pre-defined or determined using dynamic range estimation at run-time; and outputting a processed image.

The features described above with respect to the second approach apply equally to the fourth approach.

In a fifth approach of the present techniques, there is provided an apparatus comprising: at least one processing unit, coupled to memory, arranged to perform super-resolution using a neural network optimised for the at least one processing unit of the apparatus by: obtaining at least one low resolution image; and using the optimised neural network to: divide the low resolution image into fixed-size patches to be upscaled; upscale a resolution of each fixed-size patch using the optimised neural network, wherein each layer of the optimised neural network has a quantised activations tensor that is either pre-defined or determined using dynamic range estimation at run-time; concatenate the upscaled patches to form a super-resolution image; and output the super-resolution image.

The features described above with respect to the third approach apply equally to the fifth approach.

The apparatus of the fourth and fifth approaches may be any one of: a smartphone, tablet, laptop, computer or computing device, virtual assistant device, a vehicle, a drone, an autonomous vehicle, a robot or robotic device, a robotic assistant, image capture system or device, an augmented reality system or device, a virtual reality system or device, a gaming system, an Internet of Things device, or a smart consumer device (such as a smart fridge). It will be understood that this is a non-exhaustive and non-limiting list of example apparatus.

The at least one processing unit of the apparatus may be any one of a neural processing unit (NPU), a central processing unit (CPU), or a mobile central processing unit (mobile CPU). The processing unit(s) may be an NPU that supports two precision modes, such as 8-bit for activations and weights, or 16-bit for activations and 8-bit for weights. The wordlength for each layer of the hybrid-precision DNN may be therefore be one of 8 bits or 16 bits.

In a sixth approach of the present techniques, there is provided an apparatus for optimising a neural network for implementation on a processing unit, the apparatus comprising: at least one processor, coupled to memory, arranged to perform the following steps: obtaining a pre-trained neural network for performing image processing on images, the neural network comprising a plurality of layers; quantising an activations tensor of each layer of the pre-trained neural network using a uniform wordlength and a per-layer scale factor; determining, for each layer, whether to keep the activations tensor quantised using the uniform wordlength or to switch to using a new wordlength that is supported by the processing unit to quantise the activations tensor; and quantising, using the determined wordlength, the activations tensor of each layer, and thereby generating a hybrid-precision neural network optimised for implementation on the processing unit. The image processing performed by the pre-trained neural network may be, for example, super-resolution, image denoising, or image demosaicing.

The features described above with respect to the first approach apply equally to the sixth approach.

The apparatus of the sixth approach may be a remote or cloud server, which generates the hybrid-precision neural network for implementation on an end-user device or resource-constrained device, such as a smartphone. In this case, the model may be generated/optimised for particular processing units that are common in resource-constrained devices. Advantageously, this means the optimised model can then be provided to the devices for use, and the devices should be able to implement the models without difficulty.

Alternatively, the apparatus of the sixth approach may be the device which is going to run the optimised neural network. That is, the optimisation may be performed on-device. In this case, the apparatus may be any one of: a smartphone, tablet, laptop, computer or computing device, virtual assistant device, a vehicle, a drone, an autonomous vehicle, a robot or robotic device, a robotic assistant, image capture system or device, an augmented reality system or device, a virtual reality system or device, a gaming system, an Internet of Things device, or a smart consumer device (such as a smart fridge). It will be understood that this is a non-exhaustive and non-limiting list of example apparatus.

In a related approach of the present techniques, there is provided a non-transitory data carrier carrying processor control code to implement the methods described herein.

As will be appreciated by one skilled in the art, the present techniques may be embodied as a system, method or computer program product. Accordingly, present techniques may take the form of an entirely hardware embodiment, an entirely software embodiment, or an embodiment combining software and hardware aspects.

Furthermore, the present techniques may take the form of a computer program product embodied in a computer readable medium having computer readable program code embodied thereon. The computer readable medium may be a computer readable signal medium or a computer readable storage medium. A computer readable medium may be, for example, but is not limited to, an electronic, magnetic, optical, electromagnetic, infrared, or semiconductor system, apparatus, or device, or any suitable combination of the foregoing.

Computer program code for carrying out operations of the present techniques may be written in any combination of one or more programming languages, including object oriented programming languages and conventional procedural programming languages. Code components may be embodied as procedures, methods or the like, and may comprise subcomponents which may take the form of instructions or sequences of instructions at any of the levels of abstraction, from the direct machine instructions of a native instruction set to high-level compiled or interpreted language constructs.

Embodiments of the present techniques also provide a non-transitory data carrier carrying code which, when implemented on a processor, causes the processor to carry out any of the methods described herein.

The techniques further provide processor control code to implement the above-described methods, for example on a general purpose computer system or on a digital signal processor (DSP). The techniques also provide a carrier carrying processor control code to, when running, implement any of the above methods, in particular on a non-transitory data carrier. The code may be provided on a carrier such as a disk, a microprocessor, CD- or DVD-ROM, programmed memory such as non-volatile memory (e.g. Flash) or read-only memory (firmware), or on a data carrier such as an optical or electrical signal carrier. Code (and/or data) to implement embodiments of the techniques described herein may comprise source, object or executable code in a conventional programming language (interpreted or compiled) such as Python, C, or assembly code, code for setting up or controlling an ASIC (Application Specific Integrated Circuit) or FPGA (Field Programmable Gate Array), or code for a hardware description language such as Verilog (RTM) or VHDL (Very high speed integrated circuit Hardware Description Language). As the skilled person will appreciate, such code and/or data may be distributed between a plurality of coupled components in communication with one another. The techniques may comprise a controller which includes a microprocessor, working memory and program memory coupled to one or more of the components of the system.

It will also be clear to one of skill in the art that all or part of a logical method according to embodiments of the present techniques may suitably be embodied in a logic apparatus comprising logic elements to perform the steps of the above-described methods, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

In an embodiment, the present techniques may be realised in the form of a data carrier having functional data thereon, said functional data comprising functional computer data structures to, when loaded into a computer system or network and operated upon thereby, enable said computer system to perform all the steps of the above-described method.

The methods described above may be wholly or partly performed on an apparatus, i.e. an electronic device, using a machine learning or artificial intelligence model. The model may be processed by an artificial intelligence-dedicated processor designed in a hardware structure specified for artificial intelligence model processing. The artificial intelligence model may be obtained by training. Here, "obtained by training" means that a predefined operation rule or artificial intelligence model configured to perform a desired feature (or purpose) is obtained by training a basic artificial intelligence model with multiple pieces of training data by a training algorithm. The artificial intelligence model may include a plurality of neural network layers. Each of the plurality of neural network layers includes a plurality of weight values and performs neural network computation by computation between a result of computation by a previous layer and the plurality of weight values.

As mentioned above, the present techniques may be implemented using an AI model. A function associated with AI may be performed through the non-volatile memory, the volatile memory, and the processor. The processor may include one or a plurality of processors. At this time, one or a plurality of processors may be a general purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors control the processing of the input data in accordance with a predefined operating rule or artificial intelligence (AI) model stored in the non-volatile memory and the volatile memory. The predefined operating rule or artificial intelligence model is provided through training or learning. Here, being provided through learning means that, by applying a learning algorithm to a plurality of learning data, a predefined operating rule or AI model of a desired characteristic is made. The learning may be performed in a device itself in which AI according to an embodiment is performed, and/o may be implemented through a separate server/system.

The AI model may consist of a plurality of neural network layers. Each layer has a plurality of weight values, and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

The learning algorithm is a method for training a predetermined target device (for example, a robot) using a plurality of learning data to cause, allow, or control the target device to make a determination or prediction. Examples of learning algorithms include, but are not limited to, supervised learning, unsupervised learning, semi-supervised learning, or reinforcement learning.

**Brief description of drawings**

Implementations of the present techniques will now be described, by way of example only, with reference to the accompanying drawings, in which:

Figure 1 is a schematic diagram illustrating the method to optimise a pre-trained super-resolution ML model or neural network of the present techniques;

Figure 2 is a schematic diagram illustrating the method of using the optimised super-resolution ML model or neural network to generate a super-resolution image;

Figure 3A shows an algorithm used to perform wordlength optimisation;

Figures 3B to 3F are schematic diagrams illustrating the wordlength optimisation algorithm of Figure 3A;

Figure 4A shows an algorithm used to perform layerwise resilience analysis;

Figure 4B is a schematic diagram illustrating the layerwise resilience analysis algorithm of Figure 4A;

Figure 5A shows an algorithm used to perform DRE layer selection;

Figure 5B is a diagram illustrating the DRE layer selection algorithm of Figure 5B;

Figure 6 shows a flowchart of example steps to optimise a neural network;

Figure 7 shows a flowchart of example steps to perform wordlength optimisation;

Figure 8 shows a flowchart of example steps to perform dynamic range adaptation;

Figure 9 shows a flowchart of example steps to use the optimised ML model/neural network to generate a super-resolution image;

Figure 10 shows an apparatus for using the optimised ML model/neural network to perform super-resolution;

Figure 11 is a table showing results of experiments to evaluate the optimisation method;

Figure 12 shows data of the achieved runtime speedup of the optimised super-resolution ML model when implemented on different processing units;

Figure 13 is a table showing the achieved quality of the optimised super-resolution model when implemented on different processing units

Figure 14 is a table showing results of experiments to compare the optimised super-resolution model with existing on-device super-resolution systems;

Figure 15 shows data of the achieved runtime speedup of super-resolution ML models when implemented on different processing units;

Figure 16 shows data of the latency of super-resolution ML models; and

Figure 17 shows data on the energy consumption used by, and battery life of, a device as a result of implementing super-resolution ML models on the device.

## Detailed description of drawings

Broadly speaking, the present techniques generally relate to a computer-implemented method for optimising a machine learning, ML, model to perform image processing (e.g. super-resolution) on resource-constrained devices. The present techniques provide a framework that enables machine learning, ML, models that perform image processing to be optimised for deployment on resource-constrained devices. The ML models may be used for any generative image processing tasks, i.e. models that take an image as an input and output an image. The image processing performed by the ML model may be, for example, super-resolution, image denoising, or image demosaicing. These ML models typically have the same types of architecture. Therefore, although the following description is focussed on super-resolution, it will be understood that the techniques described herein apply equally to image processing models that have a similar underlying architecture. In other words, the super-resolution example described herein is one example of a ML model (or neural network) that could be optimised.

The unprecedented performance of SR DNNs in restoring realistic textures has made them a key component behind a broad range of products and use-cases, from high-resolution TVs to gaming GPUs. As a result, several works have focussed on different aspects of improving the performance of SR models, investigating their architecture, the training methodology, and the augmentation of training data. Although significant progress has been made in mapping low-resolution (LR) images closer to their high-resolution (HR) counterparts, SR DNNs still have excessive computation and memory demands. As such, they are not viable for most real-world mobile deployments.

**Efficient Super-resolution.** In order to improve the efficiency of SR models, recent works have proposed specialised model architectures either through manual design or neural architecture search (NAS). Prominent hand-crafted works have presented optimizations to avoid computing large feature maps and mitigate the cost of upscaling through the use of pixel-shuffle layers. Another line of work focused on replacing convolutions with more efficient architectural blocks, such as CARN's group convolutions and IMDN's channel splitting.

Apart from manual efforts, NAS has also been a popular approach in designing efficient SR models. A search on a multi-objective optimization function has been proposed, which targets image fidelity, compute, and memory, using reinforcement learning and evolutionary methods. Another technique minimized the search time by considering hand-crafted residual building blocks, instead of searching for more primitive operations. More recently, a generative adversarial network (GAN) search has been proposed and a tiny model, named TPSR, has been found that can focus on maximizing either image fidelity or perceptual quality. Despite the algorithmic advances, the on-device execution of these models is still impractical for real-world mobile devices, resulting in numerous system-based solutions that aim to enable these models to be efficiently and effectively deployed.

**On-device Super-resolution.** The primary paradigm of using SR on mobile phones comprises the transmission of compact LR images, followed by their upscaling and visual quality recovery on the device through an SR DNN. In this manner, the transfer load is minimized, drastically reducing the bandwidth requirements and the corresponding cellular data cost for both the users and the service provider. Such applications span from video-on-demand and video-conferencing, to graphics enhancement in mobile game streaming and data-saving alternatives of image-centric social media apps, such as Facebook Lite.

Towards deploying SR models on mobile devices, the state-of-the-art on-device SR frameworks have adopted different approaches. One line of work has focused on utilizing the heterogeneous processors (e.g. CPU, GPU, NPU) found in many recent devices. In order to effectively load-balance across these processors, these systems exploit the observation that patches of an image have varying upscaling difficulty. For instance, MobiSR adopts a total-variation metric to quantify the upscaling difficulty of each patch, which is then used for scheduling. Besides scheduling, the video-focused NEMO leverages the inter-frame dependencies in order to cache and reuse previously super-resolved patches, resulting in considerable speedup without consuming excessive energy. Finally, SplitSR combined lightweight model design together with compiler optimizations to improve CPU-based SR.

Even though these frameworks enable fast on-device upscaling, they come at the high cost of quality degradation. Notably, deploying these models on compute engines that run on lower bitwidths, such as DSPs and NPUs, causes a considerable drop in visual quality as seen in recent SR mobile systems such as MobiSR and NEMO. As a result, existing systems either reduce the number of patches dispatched to these compute engines or entirely avoid using them. As little work has been done to mitigate the effects of quantization on SR models, the present techniques aim to breach this gap to allow existing techniques to leverage the full capabilities of modern NPUs that can be found across commodity smartphones.

**Reduced-precision Quantization.** Beyond SR, precision quantization constitutes a prominent method for minimizing the computational and memory demands of DNNs. State-of-the-art quantization approaches typically adopt block floating-point schemes (also known as dynamic fixed-point), where a value $x$ is quantized as $x_{\text{quant}} = \lfloor x \cdot s_l - z_l \rceil$ using a *uniform* wordlength $b$ across all layers and with different scale factors $s_l$ and zero points $z_l$ for each layer $l$. Note, the terms "wordlength" and "bitwidth" are used interchangeably herein. The majority of existing works either *1)* apply quantization to already trained 32-bit full-precision models, followed by a retraining step to fine-tune the DNN's weights, or *2)* perform quantization-aware training to directly obtain low-precision models. As such, both approaches involve a computationally costly training step.

At the same time, although various quantization methods have been successfully applied on classification DNNs without incurring significant accuracy loss, these do not generalize to SR models, often leading to a catastrophic drop in visual quality. This is primarily due to the fact that Batch Normalization (BN) layers have been removed from state-of-the-art SR models as they were shown to severely restrict their representational power. In turn, the absence of BN layers leads to significant variability in the dynamic range of activations, making the direct utilization of quantization methods futile or requiring expensive architectural modifications and retraining.

Hence, with the increasing integration of low-precision NPUs on smartphones, there is an emerging need for novel quantization techniques that are particularly crafted for on-device SR, combining high quality with efficiency. In this context, our framework introduces novel *post-training* techniques that closely approach the quality of full-precision models, leaving little room for improvement through expensive retraining. In addition, the present techniques can be applied complementarily on models that have been trained in a quantization-aware manner.

The present techniques provide a solution which is referred to as "NAWQ-SR" herein. NAWQ-SR is a neural processing unit (NPU) centric framework, which uses wordlength quantisation (WQ) to perform super resolution (SR). Thus, NAWQ-SR is an NPU-aware wordlength quantisation based model for super-resolution. In this context, NAWQ-SR alleviates the need to access the whole training set, as it does not involve model training. Instead, an NPU-aware multi-wordlength quantization method is introduced together with a layer-selective run-time quantization mechanism. These two techniques lead to SR DNNs that can be efficiently executed on mobile NPUs while also sustaining high visual quality.

**Challenges and Opportunities of NPUs**. Recently, vendors have been integrating dedicated NPUs into their mobile devices. Designed explicitly to provide fast and efficient execution of DNN workloads, NPUs typically consist of highly optimized low-precision processing units for convolution and matrix operations. These units provide higher energy efficiency than CPUs and GPUs by omitting general-purpose hardware logic, increasing at the same time the availability of computational resources for other tasks by taking over the compute-intensive DNN execution. Despite their benefits, NPUs can often lead to degraded output quality compared to their full-precision counterparts, as data are represented using 16- or 8-bit fixed-point precision.

Recent hardware advances have led to NPUs that support *multiple arithmetic precisions.* Such examples are the Hexagon 698 processor on Qualcomm Snapdragon 865 (SDM865) and the Arm Ethos processor, both supporting two precision modes: 8-bit for both activations and weights (INT8) or 16-bit for activations and 8-bit for weights (A16W8). In spite of the new opportunities of these hardware architectures, existing deployment methodologies fail to exploit them. As such, current approaches lead to *1)* fast but low-quality execution (INT8 - due to the quantization-induced error), *2)* higher quality but slow execution (A16W8 - close to 2$\times$ slower than INT8), or *3)* slow and low-quality execution (A16W8) for models where existing 16-bit quantization methods do not suffice - which is often the case for SR models. The present techniques push the boundaries of what is possible in terms of mapping SR models to NPUs, yielding fast and high-quality designs that fully utilize their multi-precision processing capabilities.

**Overview of NAWQ-SR.** Towards addressing the shortcomings of existing mobile super-resolution systems, NAWQ-SR is an NPU-centric framework that maximizes the efficiency of on-device SR. NAWQ-SR leverages the fact that different parts of SR neural architectures have non-uniform precision needs, in order to partition the execution of an SR DNN across the heterogeneous units that are available within modern NPUs. With SR models deployed across a broad range of use-cases, NAWQ-SR is in a unique position to enhance the performance of a wide range of visual-content mobile systems and applications.

NAWQ-SR re-examines several concepts related to precision quantization and scheduling and introduces novel offline and run-time techniques to boost the performance of SR on mobile systems on chips (SoCs). NAWQ-SR shows that it is not necessary to compromise the visual quality of visual content applications or penalize their responsiveness in order to provide fast and high-quality on-device super-resolution. Instead, performance can be maximized by means of a smarter utilization of the heterogeneous processing units within mobile NPUs and a quantization-scheduling co-design at the layer level of SR DNNs. To this end, NAWQ-SR:

> 1. introduces a multi-wordlength quantization paradigm that allows the usage of different bitwidths for different layers of the SR DNN;
> 2. co-optimizes in an NPU-aware manner the hybrid-precision quantization of the DNN and the scheduling of its layers on the NPU's heterogeneous units, maximizing both speed and visual quality. NAWQ-SR achieves this by exposing the internal processing units of the target NPU to both the offline optimization stage and the run-time execution engine; and
> 3. utilizes adaptive arithmetic precision to selectively equip the SR DNN's layers with wider representational power, leading to improved visual quality, despite the fixed-point processing. NAWQ-SR re-customizes the quantization scale factors of less resilient layers to the actual activations' dynamic range encountered at run time. As such, NAWQ-SR improves visual quality beyond what was previously possible on low-precision mobile NPUs.

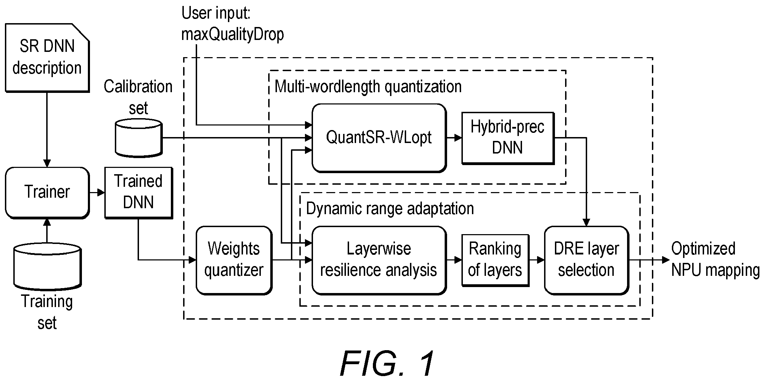

**Offline Flow.** Figure 1 is a schematic diagram illustrating the method to optimise a pre-trained super-resolution ML model of the present techniques. That is, Figure 1 shows NAWQ-SR's offline flow. The framework is supplied with a trained SR DNN and a quality drop tolerance in an image distortion metric. If the DNN is not pretrained, the Trainer trains the model on the supplied training set. As a first step, the Weights Quantizer analyses the dynamic ranges of the model's weights in each layer and accordingly reduces their precision to 8 bits, using suitable scale factors. Next, the Multi-Wordlength Quantizer considers the NPU-supported bitwidths (e.g. 16bit or 8bit) and determines the wordlength for the activations of each layer, allowing for different bitwidths (wordlengths) across layers. The output of this stage is a hybrid-precision quantized network. At this stage, the user-supplied calibration set is used to find the least computationally costly hybrid-precision DNN that meets the user's quality constraint.

As a next step, the weights-quantized DNN is passed to the Dynamic Range Adaptation module. This module is responsible for deciding which layers will not use the quantization scale factors that the Multi-Wordlength Quantizer selected based on the calibration set. Instead, these layers derive their scale factors at run time by examining on-the-fly the dynamic range of the input activations tensor and quantizing them prior to execution. This technique is referred to herein as run-time dynamic range estimation (DRE). The selection of layers that will use DRE are determined by the DRE Selection module based on the output of the Layerwise Resilience Analysis component, which assesses the resilience of each layer to low-precision arithmetic. Finally, the layers selected by the DRE Layer Selection module are augmented with DRE operations leading to an augmented hybrid-precision DNN. Overall, given the user-defined quality drop tolerance, NAWQ-SR generates a DRE-augmented hybrid-precision model together with an execution schedule, tailored for the NPU of the target mobile device and targeted content.

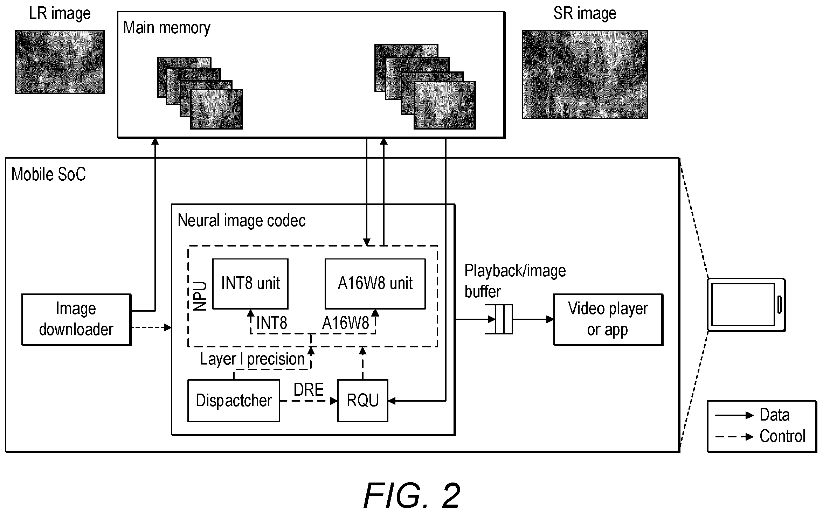

**Runtime Architecture.** Figure 2 is a schematic diagram illustrating the method of using the optimised super-resolution ML model to generate a super-resolution image. Figure 2 also depicts the system architecture of NAWQ-SR upon deployment. The operation of NAWQ-SR is typically triggered when LR images arrive to the Input Image Buffer. These are passed in a per-image manner to the Neural Image Codec, which is responsible for their upscaling. The Dispatcher module, already hosting the NAWQ-SR's hybrid-precision quantized SR DNN and the associated execution schedule, schedules the processing of the input images on the NPU. As such, each layer is executed either on the INT8 or the A16W8 unit as dictated by NAWQ-SR's selected precision for the particular layer. If run-time dynamic range estimation (DRE) is selected for the particular layer, the layer's input activations tensor is redirected to the Run-time Quantization Unit (RQU), which in turn quantizes it based on its actual dynamic range and then feeds it to the appropriate processing unit of the NPU. Finally, the processed patches are passed to the Playback/Image Buffer to be concatenated and eventually sent to the Video Player or App currently in use.

**Design of NAWQ-SR.** NAWQ-SR is designed to deliver fast and efficient on-device super-resolution under visual quality requirements. In this section, details are provided on how NAWQ-SR leverages the heterogeneous processing units of mobile NPUs through hybrid-precision execution and formally define the optimization problem formulation that jointly decides the quantization and mapping of DNN layers to the NPU resources. Moreover, the runtime components of NAWQ-SR and the associated optimizations that ensure efficient and high-performance integration into commodity mobile devices are described.

**Multiple wordlengths for mobile SR.** Traditional mobile implementations of DNNs employ either floating- or fixed-point numerical representations. While CPUs and GPUs commonly use floating-point arithmetic, DSPs and NPUs typically adopt fixed-point representations. This allows DSPs and NPUs to consume less area on a mobile SoC, leading to more energy-efficient execution and occasionally to higher performance than the use of floating-point. In modern mobile platforms, fixed-point DSPs and NPUs are generally well-known to be more efficient than their floating-point counterparts for most DNN algorithms.

A single uniform wordlength across all computations is common in both traditional implementation styles. This is a result of targeting a single, or multiple, pre-designed processing units, such as the 32-bit floating-point units (FPUs) of a CPU or the 8-bit fixed-point units of a DSP. Nevertheless, the latest NPUs can help us overcome this restriction for two reasons. First, at the hardware level, by hosting heterogeneous processing units that support different arithmetic precision, e.g. Qualcomm's 8-bit HVX and A16W8 HTA units on the Hexagon 698 processor. This property allows the optimization of the DNN execution so that different operations can be performed in physically distinct computational units using different arithmetic precision. Secondly, at the algorithmic level, it is possible to design methodologies that allow the customization (and re-customization) of each operation's precision, shaping the wordlength of each operation to the requirements of the DNN algorithm.

Together, these optimization opportunities point to an alternative design paradigm, which is named hybrid-precision. This implementation style introduces a multiple-wordlength approach and inherits the speed and energy advantages of traditional fixed-point implementations, since the computation is fixed-point with respect to each individual processing unit. However, by allowing each operation in the DNN to be encoded with a different wordlength, the design degrees of freedom are significantly increased.

To comply with the widely adopted practice of applying 8-bit quantization on the weights of a model, the weights are uniformly quantised using 8 bits across all layers, and tailor the hybrid-precision method of the present techniques to the activations. First, the granularity at which different wordlengths can be applied is defined. In NAWQ-SR, a layerwise parametrization is used. This approach ensures the efficient utilization of the underlying hardware: the quantization step prior to execution has to be amortized across several computations, which is achieved by the compute-intensive convolution or matrix operations of a DNN layer. Finer granularity, such as allowing for different wordlength per channel within a layer, would incur significant overhead due to the low computation-to-quantization ratio, counteracting the benefits of the present techniques.

Next, the hybrid-precision method is discussed, focusing on: i) the quantization strategy that specifies how a given tensor is quantized and ii) the wordlength optimization algorithm that decides the wordlength/bitwidth of each layer in the SR DNN.

*Hybrid-Precision Quantisation Strategy.* To implement multi-wordlength DNNs, a hybrid-precision quantization strategy needs to be defined. The proposed strategy utilizes different wordlength $b_l$, scale factor $s_l$ and zero point $z_l$ for each layer $l$, such that a value $x$ is quantized to a $b$-bit integer $x_{\text{quant}}$ as $x_{\text{quant}} = \lfloor x \cdot s_l - z_l \rfloor$. To introduce different wordlengths among layers, quantization is performed such that all values within each activations tensor at the output of each layer have a single wordlength, scale factor and zero point. As such, the quantization configuration, $q_l$, for the $l$-th layer is given by Eq. (1).

$$q_l = <b_l, s_l, z_l> \quad \forall l \in \mathcal{L} \qquad (1)$$

where $\mathcal{L}$ is the set of layers in the given DNN, and $b_l$ is the $l$-th layer, respectively. Furthermore, the scale factor $s_l$ and zero point $z_l$ are derived based on the estimated dynamic range of the activations tensor $x$ over the calibration set, as shown in Eq. (2).

$$s_l = \frac{(2^{b_l}-1)}{\hat{x}_{\max}-\hat{x}_{\min}} \quad , \qquad z_l = \lfloor s_l \cdot \hat{x}_{\min} \rfloor \qquad (2)$$

where $\hat{x}_{\max}$ and $\hat{x}_{\min}$ are estimates of the maximum and minimum values in tensor $\boldsymbol{x}$, typically derived by processing a dataset that is representative of the target task. This set is referred to as the calibration set.

*Hybrid-Precision Wordlength Optimization.* Given a DNN $m$ with $|\mathcal{L}|$ layers, we define a wordlength $b_l$ for each layer $l$, referred to collectively as the vector $\boldsymbol{b}$, with one element per layer. We further denote by $m(\boldsymbol{b})$ a model quantized with hybrid precision across its layers as dictated by $\boldsymbol{b}$. Let $\epsilon$ be the user-specified maximum allowable drop on average quality, which can be quantified using the peak signal-to-noise ratio (PSNR) image reconstruction metric, denoted by $\mathbb{E}(Q(m(\boldsymbol{b})))$. Given a cost estimator $T(m(\boldsymbol{b}))$ (*e.g.* latency estimate or FLOPs), the following constrained optimization problem is posed:

$$\min_{\boldsymbol{b}} T(m(\boldsymbol{b})) \quad subject\,to \tag{3}$$

$$\forall l \in \mathcal{L} : b_l \in \mathcal{W}$$

$$\mathbb{E}(Q(m(\boldsymbol{b}))) - \mathbb{E}(Q(m(\boldsymbol{u}))) \leq \epsilon$$

where $\mathcal{W}$ is the candidate wordlength set and $\boldsymbol{u}$ is the uniform wordlength vector that assigns 16 or 32 bits to all layers. The scale factor $s_l$ and zero point $z_l$ are implicitly derived as per Eq. (2) and hence are implicitly co-optimized with the selection of $b_l$. Thus, they are omitted from Eq. (3).

The optimization considers the supported bitwidths of the underlying NPU (*e.g.* $\mathcal{W}$ = {8,16} for SDM865) and aims to find the wordlengths and scale factors of all layers that minimize the execution cost of an SR DNN on the NPU, subject to the given quality constraints. To capture the execution cost on the specialized hardware of NPUs, a variation of the number of bit operations (BOPs) metric is adopted as the cost estimator *T*. The metric weighs each operation with a cost based on the number of bytes used. Specifically, operations performed in 32, 16, and 8 bits are assigned a cost of 4, 2 and 1 respectively, highlighting the runtime and memory differences among the different bitwidths. Hence, given a model *m* and a wordlength vector *b*, GetBOPs(*m(b)*) returns the total cost of executing *m* by considering each layers' number of operations and assigned wordlength *(bₗ)*.

The per-layer wordlength selection can be cast as a search problem aiming to achieve peak processing speed by selecting suitable bitwidths. For an SR DNN with $|\mathcal{L}|$ layers and $|\mathcal{W}|$ candidate bitwidths, the total number of design points that correspond to different hybrid-precision configurations is $|\mathcal{W}|^{|\mathcal{L}|}$. With an increase in either the depth of a DNN or the number of available bitwidths, an exhaustive enumeration rapidly becomes intractable. In real-world deployments, although NPUs currently support up to two bitwidths, *e.g.* 8 or 16 bits, state-of-the-art SR DNNs reach significant depths, ranging from 33 layers for the lightweight TPSR model and hence 8 billion design points, up to more than 1500 layers for RCAN and $2^{1500}$ design points. As a result, the combinatorial scaling of the design space size and the large depth of SR DNNs prohibit optimization by means of enumeration.

**QuantSR-WLopt.** In this context, QuantSR-WLopt is proposed, a heuristic method to obtain a solution in the nonconvex design space. The key principle behind QuantSR-WLopt is to adopt a cost-prioritizing strategy that attempts to apply more aggressive quantization to the most FLOPs-heavy layers first, through an efficient single-shot wordlength adaptation, *i.e.* by attempting to change the wordlength of each layer only once.

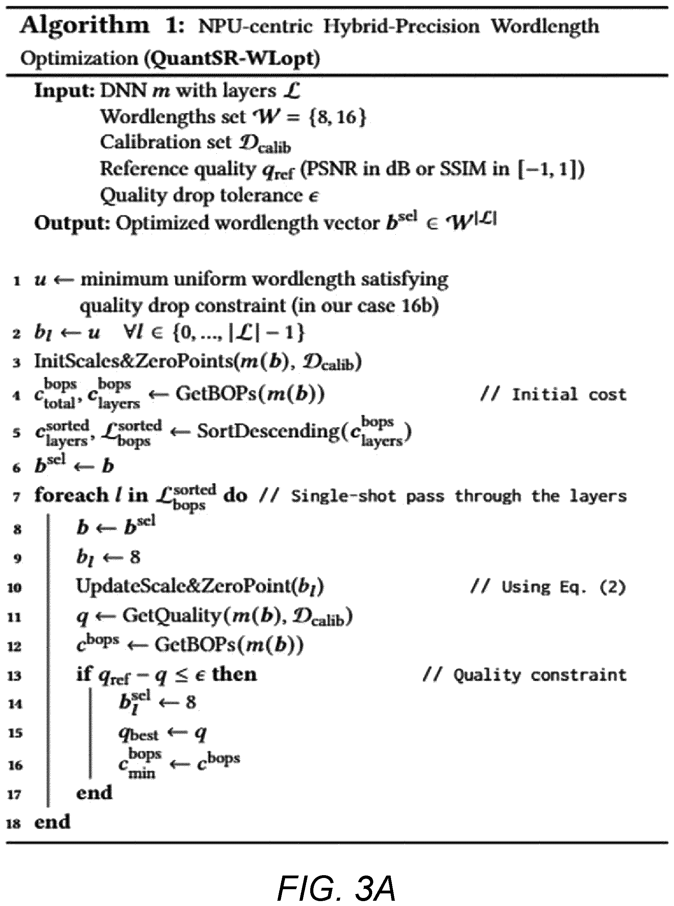

With reference to Algorithm, shown in Figure 3A, and with a running example of W = {8,16}, QuantSR-WLopt first quantizes all layers with the same uniform high-precision wordlength (*e.g.* 16 bits) (lines 1-3) and sorts them with respect to the amount of BOPs (lines 4-5). Next, the algorithm iterates *once* along the depth of the DNN and sets the wordlength of the *l*-th layer to 8 bits (line 8). By passing through the supplied calibration set, the current achieved quality *q* is calculated (line 11), together with the new cost. If the current quality satisfies the constraint, layer *l* is kept to 8 bits; else it is reverted back to 16 bits to recover the lost quality (lines 13-16).

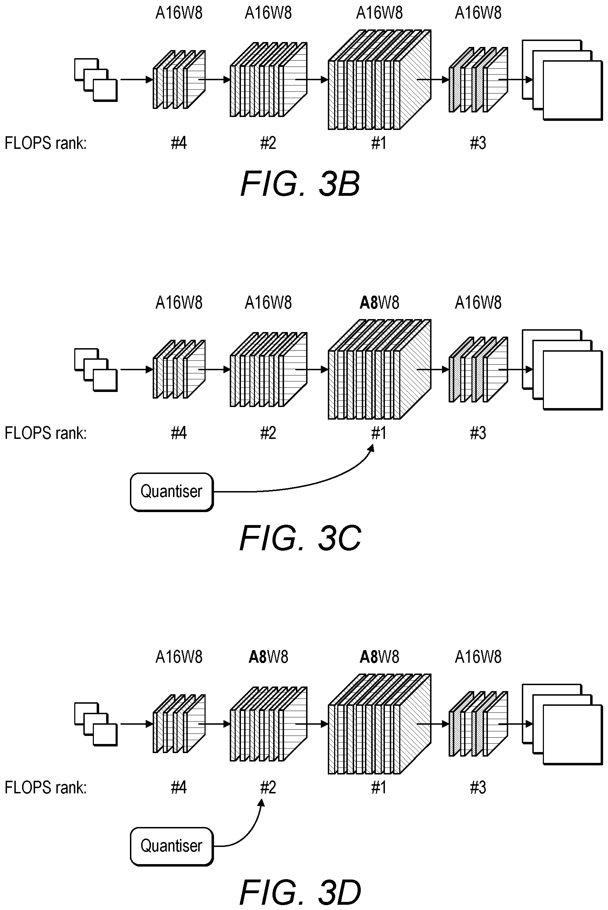

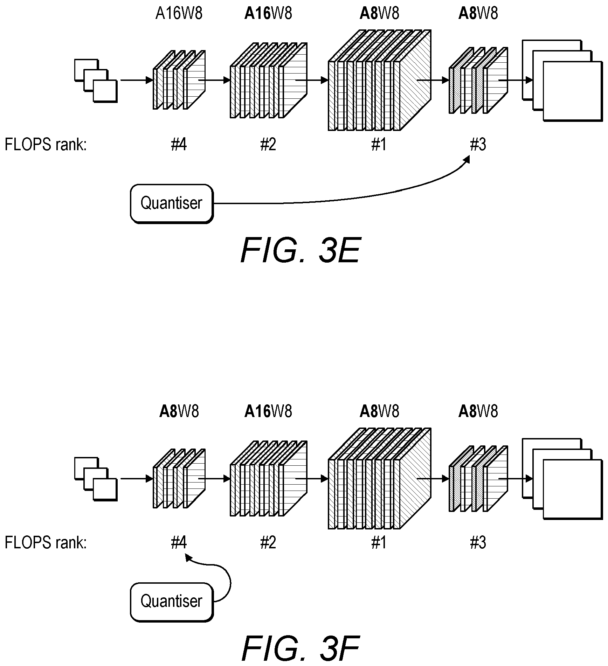

Figures 3B to 3F are schematic diagrams illustrating the wordlength optimisation algorithm of Figure 3A, with respect to an example DNN. As shown in Figure 3B, the DNN comprises four layers, which process incoming images to generate super-resolution images. Figure 3B shows how the activations tensors of each layer is set to the same uniform high-precision wordlength, in this case 16 bits (as denoted by "A16"). Each layer is then sorted with respect to the computational cost in terms of BOPs. Thus, it can be seen from the FLOPs rank that the first layer in the DNN architecture has the lowest computational cost, while the third layer in the architecture has the highest computational cost. As mentioned above, the algorithm prioritises the most FLOPs-heavy layer first. Thus, in Figure 3C, the optimisation process begins with the third layer (ranked first in terms of FLOPs). The quantiser changes the wordlength of this layer to a lower-precision wordlength (e.g. 8 bits, as denoted by "A8"). In this case, the quality constraint is met, and thus, the lower-precision wordlength is retained (as shown in Figure 3D). In Figure 3D, the process is continued with the next most FLOPs-heavy layer. In this case, the quality constraint is not met and thus, the wordlength is reverted back to the higher-precision wordlength (as shown in Figure 3E by the "A16"). Figures 3E and 3F show how the quantiser is applied to the remaining two layers in the order specified by the FLOPs rank. The final wordlength vector for this example DNN is [8, 16, 8, 8]. Thus, three of the layers have activation tensors quantised using a lower precision wordlength, without loss of quality.

The QuantSR-WLopt method exhibits a number of crucial properties. With respect to complexity, it scales linearly with the number of layers $|\mathcal{L}|$ as each layer is examined only once. With respect to execution cost, by prioritizing the higher-cost layers, QuantSR-WLopt's cost-aware criterion ensures that a less costly layer is never quantized to lower precision at the expense of a heavier layer. Hence, it prioritizes the quantization of layers that will have a larger impact on minimizing the runtime. With regards to the quality, the algorithm guarantees by design the return of a configuration that meets the quality constraint, if and only if such a design were to exist in the design space. As such, the upper bound in quality is given by $m(\boldsymbol{b}^{\max})$ where $b_l^{\max} = \max(\mathcal{W})$ for all $l \in \mathcal{L}$ $\mathcal{L}$. Thus, in order to address cases where the upper bound in quality is not satisfactory, we introduce a new design dimension in the quantization scheme by deciding whether to fix or dynamically determine the scale factor and zero point of each layer.

**Dynamic range adaptation**. As described above, the A16W8 mode constitutes the upper bound in attainable visual quality of the hybrid-precision scheme of the present techniques. However, there are cases where A16W8 fails to satisfy the constraint of Eq. (3), leading to unacceptable quality degradation. Current low-precision NPU mappings fail to reach acceptable quality, especially when targeting efficient SR models. This fact has led to existing work resorting to either partial use of the NPU or none at all, thus consuming scarce CPU and GPU resources.

To push the quality of NPU-based SR beyond what was previously attainable, while sustaining the processing benefits of hybrid-precision execution, NAWQ-SR introduces a new design dimension to the quantization strategy, which is named *dynamic range estimation* (DRE). DRE adapts the scale factor and zero point of a given set of activations *at run time,* based on the *actual* range of activation values for the *particular* input sample. This technique overcomes the limitations of existing works, where the values of $s_l$ and $z_l$ are statically derived prior to deployment and remain fixed at run time. The primary limitation that leads to degraded output quality is manifested in cases where the estimated dynamic range does not capture the actual encountered range of an input. In these cases, the statically determined precision underutilizes the representation range of the selected wordlength, leading to excessive numerical error and, in turn, quality drop. Instead, DRE adapts the scale factor and zero point in an input-dependent manner, occupying the full range of values for the activations of the current input.

With this scheme, the new quantization method for each layer is formulated as follows

$$q_l = \langle b_l, s_l, z_l, d_l \rangle \quad \forall l \in \mathcal{L} \quad (4)$$

where $d_t \in \{0,1\}$ indicates whether DRE is applied on the *l*-th layer. When $d_l$ is 1 and DRE is enabled, the actual dynamic range of the input activations tensor $\boldsymbol{x}$ is first calculated and the scale factor $s_l$ and zero point $z_l$ are derived on-the-fly as per Eq. (2), by substituting the statically determined estimates at the denominator with the actual values: $\boldsymbol{x}_{\max}$ and $\boldsymbol{x}_{\min}$.

Despite its potential, the advantages provided by DRE come at a cost. When DRE is applied on a given layer, the additional computational overhead of finding the actual range (*i.e.* min/max values) of the activation's tensor and computing the new scale factor and zero point has to be taken into account. In other words, applying DRE across all layers in a brute-force manner can lead to excessive latency and thus negate its benefits. Therefore, in order to effectively utilize DRE, a method is devised for: *i)* quantifying the resilience of each layer to low precision, together with *ii)* an algorithm that leverages this information to *selectively* apply DRE to a subset of the SR DNN's layers. To this end, the *Layerwise Resilience Analysis* (LRA) and *DRE Layer Selection* methods are presented that address each respective problem in NAWQ-SR.

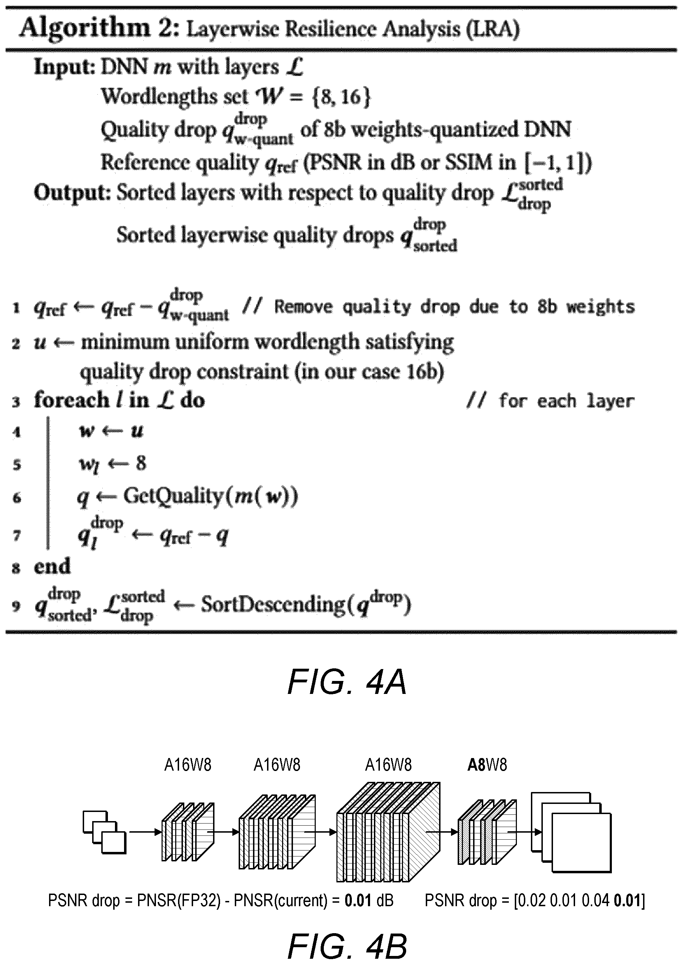

*Layerwise Resilience Analysis.* Algorithm 2, shown in Figure 4A, presents NAWQ-SR's technique for estimating each layer's resilience to reduced-precision arithmetic. The core idea behind LRA is to isolate the contribution of each layer to the quality drop of a quantized model. As the weights are already quantized to 8 bits, first the PSNR drop caused solely by the weights quantization (line 1) is subtracted. In this manner, any subsequently observed PSNR degradation is due to the activations quantization. The algorithm starts by using a uniform higher-precision representation, *e.g.* 16 bits, for the activations of all layers (line 2). Next, iteration through the DNN layers is performed in order to quantize each one *individually* to 8 bits and obtain the associated quality drop with respect to the quality of the weight-quantized model (line 7). Finally, the DNN layers are sorted in a decreasing order of quality drop (line 8).

Figure 4B is a schematic diagram illustrating the layerwise resilience analysis algorithm of Figure 4A. The resilience of each layer is assessed in turn. To do so, the higher-precision wordlength ("A16") of a layer is temporarily switched to a lower-precision wordlength ("A8"), one-by-one, and the PSNR drop is determined. The wordlength of that layer is reverted back to the higher-precision wordlength before assessing the resilience of the next layer. As shown in the example DNN of Figure 4b, the PSNR drop for the first layer is determined to be 0.02 dB, the second layer is 0.01 dB, the third layer is 0.04 dB, and the fourth layer is 0.01 dB.

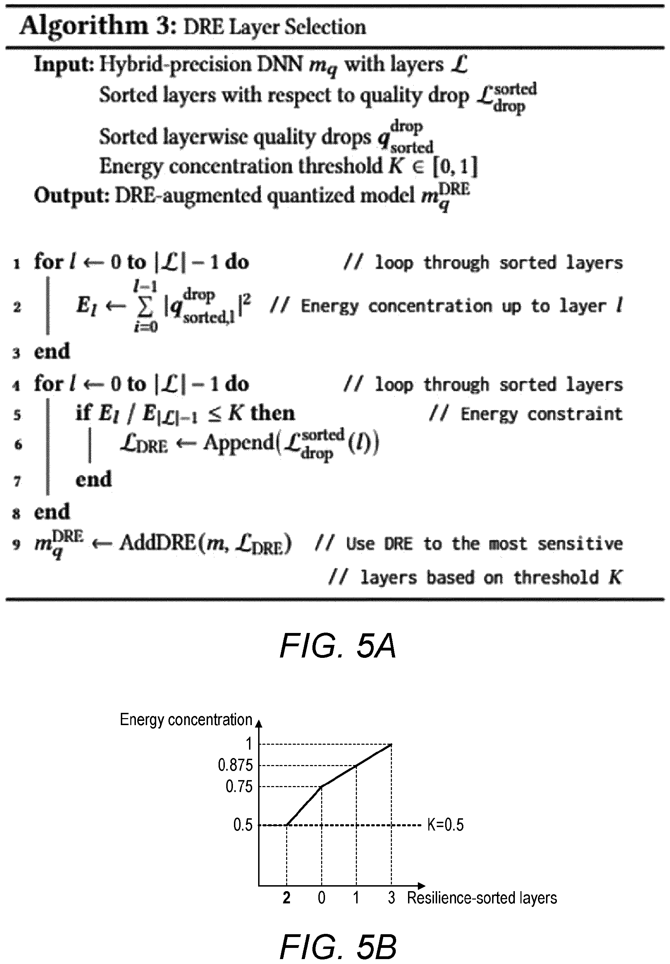

*DRE Layer Selection.* After selecting the highest performing per-layer wordlength via QuantSR-WLopt and estimating the layerwise resilience to quantization through LRA, NAWQ-SR selectively picks a subset of layers to have their scale factors and zero points computed at run time, based on their actual dynamic range. Algorithm 3, shown in Figure 5, describes this layer selection process. The objective of the algorithm is to recover the visual quality for the layers which exhibit high quality degradation when quantized. To this end, NAWQ-SR interprets the layerwise PSNR drop as a signal and adopts the respective signal energy (line 2) as a criterion to tune the amount of layers that will utilize DRE. Given a set of layers, ordered by quality drop, the DRE layer selection algorithm first calculates the energy concentration up to each of these layers (lines 1-3). For instance, the energy concentration of a layer *l* includes the energy concentration of the previous ordered layers (0 to *l*). Next, the algorithm selects for run-time DRE all the layers until the last one that meets the requested energy concentration threshold *K* (lines 4-7). Threshold *K* is represented as a fraction of the total energy concentration ($K \in [0, 1]$) and allows for enhancing visual quality at the expense of the extra DRE-induced latency, by adapting which and how many layers use DRE.

Figure 5B is a diagram illustrating the DRE layer selection algorithm of Figure 5B. As shown in Figure 5B, the energy concentration of each layer is plotted in order of resilience. In this example, the threshold energy concentration *K* is 0.5. Only those layers up to the threshold are selected for DRE, which in this case, is only the second layer of the DNN.

**Neural image codec.** During run time, the Neural Image Codec (shown in Figure 2) is responsible for dividing the downloaded low-resolution images into fixed-size patches to be upscaled using the target SR DNN and an optimized NPU mapping.

*Dispatcher.* To guide the on-device execution, the Neural Image Codec introduces a dispatcher that, given the per-layer quantization configuration $q_l$, schedules execution to the appropriate hardware processor of the NPU, using the requested bitwidth, scale factor and zero point. To ensure efficient execution, this process is performed in a number of steps. First, the dispatcher adopts a partitioning strategy to reduce the communication between the codec components and the target processors. Specifically, the dispatcher partitions the DNN into groups of consecutive layers based on their target bitwidth (*e.g.* INT8 or A16W8) and range estimation technique ($d_l$), scheduling execution on a per-partition basis. As such, the scheduling of consecutive layers that need to interact with the same components is coalesced, amortizing the cost of communication between components.

Second, the dispatcher considers the requested range estimation technique ($d_l$). Partitions without DRE can be executed without additional supervision using the supplied scale factors and zero points. The remaining partitions are monitored by the RQU to adjust the per-layer scaling factors and zero points at run time.

Finally, the dispatcher coordinates with the NPU executor to perform inference on a target processor (*e.g.* either HVX or HTA in SDM865's NPU) that supports the requested partition's bitwidth representation. It is noted that while the DNN partitions are represented with distinct bitwidths, their weights are always in 8 bits and, hence, only activations are quantized on-the-fly. As such, NAWQ-SR shares the model weights between the activation wordlength representations and thus incurs no extra memory cost for supporting both INT8 and A16W8 representations. As a last step, the resulting upscaled SR patches are passed to the Playback/Image Buffer to be concatenated and consumed by the target application.

Many commercial NPUs already provide either dedicated processors or extra cores for orchestrating execution where NAWQ-SR's dispatcher can be integrated. Such instances are the Q6 processor in Qualcomm's AI processor, or the NPU controller (NPUC) in the latest Samsung Exynos chipsets. By executing on a separate processor, NAWQ-SR's dispatcher and the partitioned inference can be performed in parallel in a pipelined fashion, thus sustaining high utilization of the NPU resources, while requiring no access to the resources of the main CPU and improving the overall efficiency.

*Run-time Quantization Unit.* For the partitions that require DRE, the RQU is responsible for estimating the per-layer dynamic range and adapting the respective scale factors and zero points during run time. To derive the new scale and zero point values, the RQU captures each layer's input tensors and extracts their range of values (*i.e.* $x_{min}$ and $x_{max}$). Then, the unit proceeds with the computation of the new scale factor and zero point as dictated by Eq. (2). The layer's inputs are then quantized using the new computed parameters and fed to the appropriate processing unit for the actual layer execution.

To be deployable without starving the resources of the target mobile device, the RQU has to exhibit low resource usage when invoked. To this end, the RQU first vectorizes the max/min operations by dividing the input activations tensor across parallel max/min search tasks and then applies a parallel-reduce operation to obtain the final range. Finally, the RQU execution is placed on the same processing unit as the layers' partition at hand, to avoid unnecessary data transfers. Overall, the use of DRE results in improved quality with minimal overhead.

**Additional Optimisations.** Modern state-of-the-art SR DNNs employ pixel-shuffle for upsampling the activation's feature maps to the desired resolution. However, due to the limited cache of NPUs and pixel-shuffle's excessive memory demands, these layers cannot be directly mapped to NPU, leading to runtime errors. The source of inefficiency may be primarily attributed to the 6-dimensional intermediate data of the pixel-shuffle operation. It is often the case that the NPU executor attempts to partition the tensor by storing each dimension on a separate memory bank, to provide the processing units with parallel access to all dimensions. Hence, in cases where the tensor dimensions exceed the number of NPU memory banks or the depth of the banks is severely underutilized, the NPU can run out of memory.

To address this problem, a data layout transformation technique is employed. This approach restructures the input and activation tensors so that a maximum of four dimensions are used throughout the pixel-shuffling process.

The original pixel-shuffle operation with a upscale factor of *s* on a tensor $x \in \mathbb{R}^{1 \times c_{in} \times h \times w}$ with $c_{in}$ channels, and height *h* and width *w* involves the following steps: [leftmargin=*, noitemsep,topsep=0pt]

1. Reshape 4D tensor $x$ into a 6D tensor of shape: $1 \times c_{out} \times s \times s \times h \times w$
2. Permute dimensions as: $1 \times c_{out} \times h \times s \times w \times s$
3. Reshape 6D tensor into final 4D tensor of shape: $1 \times c_{out} \times s \cdot h \times s \cdot w$

This implementation leads to underutilization of the NPU memory. Instead, the following steps are performed:

1. Reshape 4D tensor into a 2D tensor of shape: $c_{out} \times s \cdot s \cdot h \cdot w$
2. Extract each of the $c_{out}$ channels in parallel, producing $c_{out}$ 1D tensors of size:

$$s \cdot s \cdot h \cdot w$$

3. Reshape each of the $c_{out}$ 1D tensors to a 4D tensor of shape: $s \times s \times h \times w$
4. Permute each of the $c_{out}$ 4D tensors as $h \times s \times w \times s$
5. Reshape each of the $c_{out}$ 4D tensors to 2D tensor of shape: $s \cdot h \times s \cdot w$
6. Stack the $c_{out}$ 2D tensors to form a single 3D tensor of shape: $c_{out} \times s \cdot h \times s \cdot w$

In this manner, 4D tensors are never exceeded and the memory of the NPU is more fully utilized, enabling the mapping of upsampling layers on the NPU. This technique was crucial in order to run SR DNNs for both baselines and NAWQ-SR on the target platform (described below).

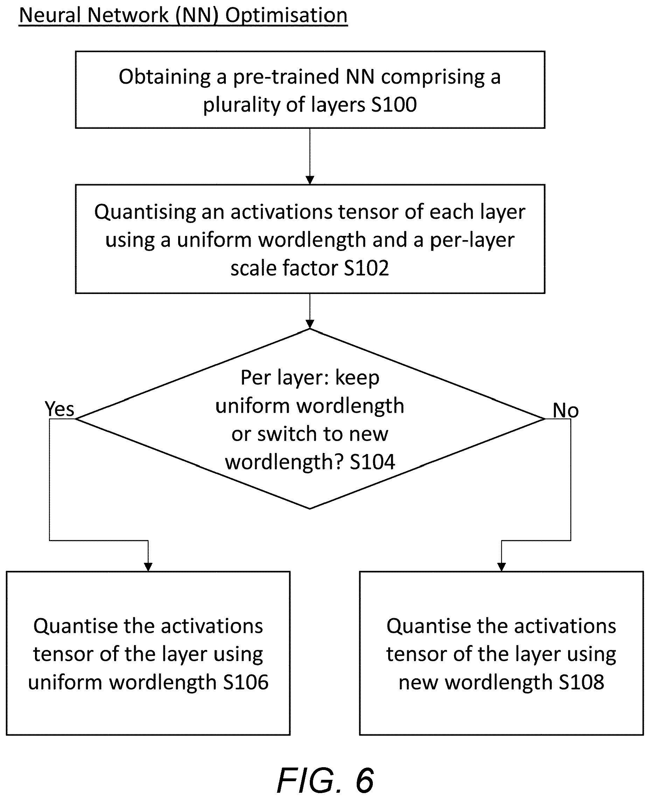

Before explaining how NAWQ-SR was evaluated, the present techniques are summarised with reference to Figures 6 to 10.

Figure 6 shows a flowchart of example steps to optimise a neural network used for image processing. The method comprises: obtaining a pre-trained neural network for performing image processing on images (e.g. a super-resolution deep neural network, DNN, for performing super-resolution on low resolution images), the neural network/DNN comprising a plurality of layers (step S100). The method comprises: quantising all values of an activations tensor of each layer of the pre-trained neural network/DNN using a uniform wordlength and a per-layer scale factor (step S102); and determining, for each layer, whether to keep the activations tensor quantised using the uniform wordlength or to switch to using a new wordlength that is supported by the processing unit to quantise the activations tensor (step S104).

For example, as shown with respect to Figures 3B to 3F, step S104 may comprise: ordering each quantised layer (that has been quantised using the uniform wordlength and appropriate scale factor) based on the number of bit operations, BOPs, associated with the layer; temporarily adjusting the wordlength used to quantise the activations tensor of a I-th layer to a lower-precision wordlength; determining whether a minimum quality threshold value is satisfied; and setting the wordlength used to quantise the I-th layer to the lower-precision wordlength when the minimum quality threshold value is determined to be satisfied.

Thus, if at step S104 it is determined that the minimum quality threshold value is met when a lower-precision wordlength is used to quantise the activations tensor of a particular layer, then the wordlength used to quantise the activations tensor of that layer is switched to the lower-precision wordlength (step S108). However, if at step S104 it is determined that the minimum quality threshold value is not met when a lower-precision wordlength is used to quantise the activations tensor of a particular layer, then the wordlength used to quantise the activations tensor of that layer is reverted back to the higher-precision/uniform wordlength (step S106). In this way, the method comprises quantising all values of the activations tensor of each layer using an appropriate wordlength based on the determining, and thereby generating a hybrid-precision neural network/DNN optimised for implementation on the processing unit.

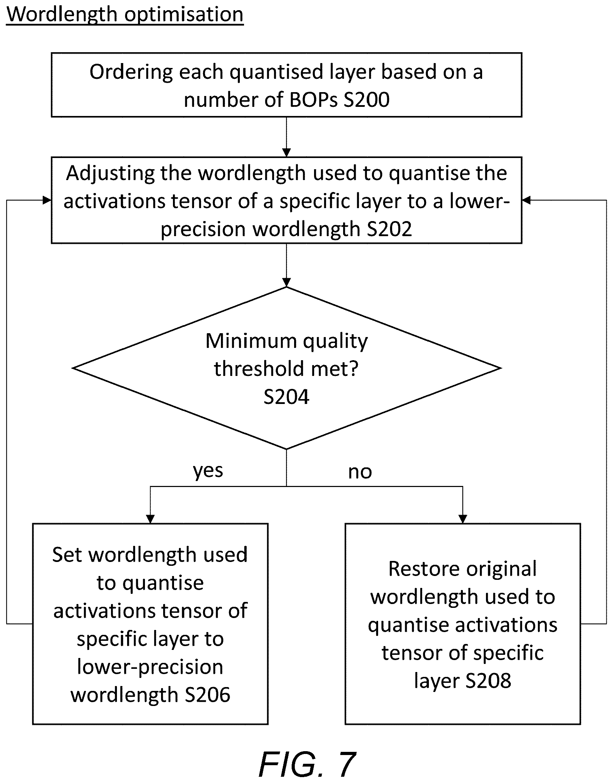

Figure 7 shows a flowchart of example steps to perform wordlength optimisation, which occurs as part of step S104 of Figure 6 (determining a wordlength for each layer). Determining a wordlength for each layer may comprise: determining a computational cost in terms of a number of bit operations, BOPs, associated with each layer; wherein determining whether to keep the uniform wordlength comprises prioritising quantisation of layers of the neural network/DNN that have a high computational cost. The determining may further comprise keeping the uniform wordlength or switching to a new wordlength by identifying, for each layer, which wordlength supported by the processing unit minimises the computational cost of an operation performed by the layer on the processing unit while maintaining the minimum quality threshold value. This wordlength optimisation/identification process is shown in Figure 7.

The method may comprise ordering each quantised layer based on the number of bit operations, BOPs, associated with the layer (step S200) and temporarily adjusting the wordlength used to quantise the activations tensor of a specific layer (i.e. a I-th layer) to a lower-precision wordlength supported by the processing unit (step S202). The method may comprise determining whether a minimum quality threshold value is satisfied (step S204). The method may comprise setting the wordlength to quantise the activations tensor of the specific layer (I-th layer) to the lower-precision wordlength when the minimum quality threshold value is determined to be satisfied (step S206). When the minimum quality threshold value is determined not to be satisfied, the method may comprise restoring the wordlength used to quantise the activations tensor of the specific (I-th) layer to its original value (step S208). As shown in Figure 7, the method may further comprising repeating the adjusting, determining and ordering steps for each layer of the neural network/DNN. In this way, the wordlength used to quantise the activations tensor of each layer of the DNN is calibrated to enable the neural network/DNN to achieve the required super-resolution quality without increasing runtime.

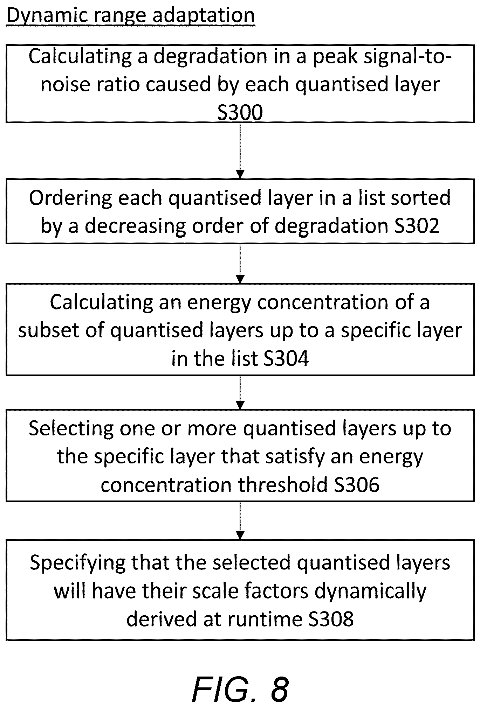

Figure 8 shows a flowchart of example steps to perform dynamic range adaptation. As explained in more detail above, there are some cases at runtime (inference time) where the hybrid-precision scheme fails to satisfy the quality constraint and leads to unacceptable quality drop. The present techniques therefore provide an additional design dimension to the quantisation strategy, named Dynamic Range Estimation (DRE). DRE adapts the scale factor and zero point of a give set of activations at runtime, based on the actual range of activation values for a particular, specific input sample. This means that the quantisation of the activations of particular layers of the neural network/DNN may be determined and adjusted at runtime, so that the upscaling of a particular input low resolution image generates a super-resolution image of the required quality. Applying DRE across all layers of the neural network/DNN could lead to excessive latency at runtime and therefore, the present techniques provide a method to selectively apply DRE to a subset of the layers of the neural network/DNN. The present techniques therefore identify one or more quantised layers of the neural network/DNN for which the scale factors used to quantise the activations is to be overridden and derived at runtime. Thus, Figure 8 shows a flowchart of example steps to perform dynamic range adaptation, which occurs as part of step S104 of Figure 6 (determining a wordlength for each layer).

Identifying one or more quantised layers of the neural network/DNN for which the scale factor(s) are to be overridden may comprise: determining a resilience of each quantised layer of the neural network/DNN to low (reduced) precision. The idea is to isolate each layer's contribution to the quality drop of a quantised model, and then to recover the visual quality for the layers which exhibit the biggest quality drop (large quality degradation) when the layers are quantised. Thus, determining a resilience of each quantised layer may comprise: calculating a degradation in a peak signal-to-noise ratio value caused by each quantised layer (step S300); ordering each quantised layer in a list sorted by a decreasing order of degradation (step S302); calculating an energy concentration of a subset of quantised layers up to a I-th layer in the list (step S304); selecting one or more quantised layers up to the I-th layer that satisfy an energy concentration threshold (step S306); and specifying that the selected quantised layers will have their scale factor(s) dynamically derived at runtime (step S308).

The method of Figure 8 may comprise repeating the calculating, selecting and specifying steps for each quantised layer in the list, by selecting another specific layer in the ordered list and repeating steps S304 to S308 for that specific layer.

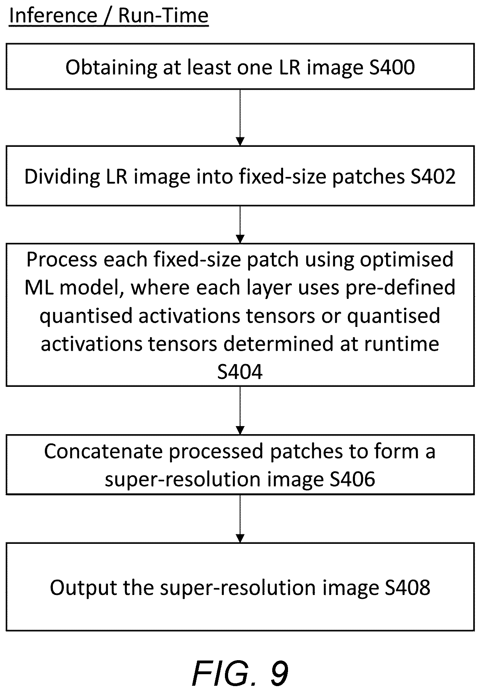

Figure 9 shows a flowchart of example steps to use the optimised ML model to generate a super-resolution image. The method is for using an optimised super-resolution deep neural network, DNN, of a machine learning, ML, model, on a processing unit to perform super-resolution. The method comprises: obtaining at least one low resolution image (step S400); and using the optimised ML model to: divide the low resolution image into fixed-size patches to be upscaled (step S402); upscale a resolution of each fixed-size patch using the optimised ML model, wherein each layer of the optimised ML model has quantised activations that are either pre-defined - e.g. using predefined scale factors - or determined using dynamic range estimation at run-time - e.g. using dynamically determined scale factors - (step S404); concatenate the upscaled patches to form a super-resolution image (step S406); and output the super-resolution image (step S408).

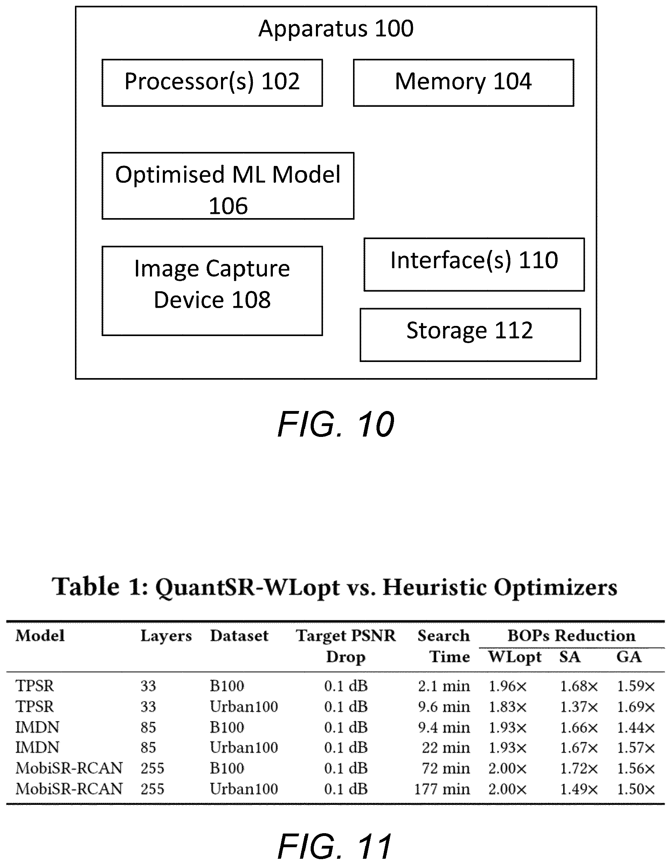

Figure 10 shows an apparatus for using the optimised ML model/neural network to perform super-resolution. The apparatus 100 may be any one of: a smartphone, tablet, laptop, computer or computing device, virtual assistant device, a vehicle, a drone, an autonomous vehicle, a robot or robotic device, a robotic assistant, image capture system or device, an augmented reality system or device, a virtual reality system or device, a gaming system, an Internet of Things device, or a smart consumer device (such as a smart fridge). It will be understood that this is a non-exhaustive and non-limiting list of example apparatus.

The apparatus 100 comprises at least one processor (also referred to as a processing unit) 102 coupled to memory 104. The at least one processor 102 may comprise one or more of: a microprocessor, a microcontroller, and an integrated circuit. The memory 104 may comprise volatile memory, such as random access memory (RAM), for use as temporary memory, and/or non-volatile memory such as Flash, read only memory (ROM), or electrically erasable programmable ROM (EEPROM), for storing data, programs, or instructions, for example.

The at least one processor or processing unit 102 of the apparatus may be any one of a neural processing unit (NPU), a central processing unit (CPU), or a mobile central processing unit (mobile CPU). The processing unit(s) 102 may be an NPU that supports at least two precision modes, such as (i) 8-bit for activations and weights, and (ii) 16-bit for activations and 8-bit for weights. The wordlength for each activations tensor of each layer of the hybrid-precision DNN may be therefore be one of 8 bits or 16 bits. However, it will be understood that the processing unit may support more than two precision modes.

The apparatus 100 may comprise storage 112 which may store a trained and optimised ML model/neural network 106. The apparatus 100 may comprise an image capture device 108 for capturing images which are to be processed by the super-resolution ML model 106. The apparatus 100 may comprise an interface 110 for receiving images (e.g. from a broadcaster or content streaming service) which are to be processed by the super-resolution ML model 106.

The at least one processor 102, coupled to memory 104, may be arranged to perform super-resolution using the trained machine learning, ML, model 106 by obtaining at least one low resolution image (e.g. from the image capture device 108 or interface 110). The processor 102 may be arranged to use the optimised ML model to: divide the low resolution image into fixed-size patches to be upscaled; upscale a resolution of each fixed-size patch using the optimised ML model, wherein each layer of the optimised ML model has quantised activations that are either pre-defined or determined using dynamic range estimation at run-time; concatenate the upscaled patches to form a super-resolution image; and output the super-resolution image.

**Evaluation.** The performance of NAWQ-SR is evaluated by assessing its core components and comparing with highly optimised status-quo designs and existing on-device SR systems.

**Experimental Setup.** In the experiments, the Qualcomm Snapdragon 865 SoC (SDM865) was targeted, hosted on a Samsung Galaxy S20. SDM865 comprises an octa-core Kryo 585 CPU, an Adreno 650 GPU and the Hexagon 698 NPU. The NPU integrates a vector processor (HVX) supporting INT8 precision and a tensor accelerator (HTA) supporting both INT8 and A16W8 execution. The experiments consider $\mathcal{W}$ $\mathcal{W}$ = {8,16} as the activations wordlengths and map INT8 to HVX and A16W8 to HTA. The offline component of the system was implemented using PyTorch (v1.6) and the runtime components by leveraging the Qualcomm Snapdragon Neural Processing Engine (SNPE) SDK (v1.47).

**SR Models.** Four state-of-the-art models of varying depth, architecture and computational footprint were targeted: the lightweight TPSR (Royson Lee, L. Dudziak, M. Abdelfattah, Stylianos I. Venieris, H. Kim, Hongkai Wen, and N. Lane. 2020. Journey Towards Tiny Perceptual Super-Resolution. In European Conference on Computer Vision (ECCV).), the mid-range IMDN (Zheng Hui, X. Gao, Yunchu Yang, and X. Wang. 2019. Lightweight Image Super-Resolution with Information Multi-distillation Network. Proceedings of the 27th ACM International Conference on Multimedia (2019)), and an efficient variant of RCAN (Yulun Zhang, Kunpeng Li, Kai Li, Lichen Wang, Bineng Zhong, and Yun Fu. 2018. Image Super-Resolution Using Very Deep Residual Channel Attention Networks. In European Conference on Computer Vision (ECCV)) adopted by MobiSR (Royson Lee, Stylianos I. Venieris, L. Dudziak, S. Bhattacharya, and N. Lane. 2019. MobiSR: Efficient On-Device Super-Resolution through Heterogeneous Mobile Processors. In The 25th Annual International Conference on Mobile Computing and Networking (MobiCom)) which we refer to as MobiSR-RCAN.

**Training Details.** Pe-trained models for TPSR and IMDN are used, provided by the respective authors. For MobiSR-RCAN, the training scheme in the MobiSR paper mentioned above is folowed and reproduce the reported results. Following the common practice of both the SR and mobile communities, all models were trained on DIV2K (R. Timofte et al. 2017. NTIRE 2017 Challenge on Single Image Super-Resolution: Methods and Results. In IEEE Conference on Computer Vision and Pattern Recognition Workshops (CVPRW)), consisting of 800 diverse-content images of 2K resolution. An upscaling factor ×4 is used in order to compare with previous works.

**Performance Metrics.** Both visual quality and processing latency are reported as evaluation metrics. For the first, the standard SR reconstruction quality metrics: PSNR and structural similarity (SSIM) are used. PSNR is a logarithmic metric. As such, seemingly minimal improvements of 0.1 dB are significant and perceivably important. For processing speed, the average latency across 50 runs is reported, with the latency measurements obtained through SNPE's timing utilities. Unless mentioned otherwise, a target high-resolution image of 720p (1280×720) is assumed.

**Datasets.** The evaluation was conducted on the standard SR benchmarks used across a large body of recent mobile SR works, namely Set5 (Marco Bevilacqua, Aline Roumy, Christine Guillemot, and Marie line Alberi Morel. 2012. Low-Complexity Single-Image Super-Resolution based on Nonnegative Neighbor Embedding. In British Machine Vision Conference (BMVC)), Set14 (Jianchao Yang, JohnWright, Thomas S. Huang, and Yi Ma. 2010. Image Super-resolution via Sparse Representation. Trans. Img. Proc. 19, 11 (2010), 2861-2873), B100 (D. Martin, C. Fowlkes, D. Tal, and J. Malik. 2001. A database of human segmented natural images and its application to evaluating segmentation algorithms and measuring ecological statistics. In IEEE International Conference on Computer Vision (ICCV)), and Urban100 (J. Huang, A. Singh, and N. Ahuja. 2015. Single image super-resolution from transformed self-exemplars. In IEEE Conference on Computer Vision and Pattern Recognition (CVPR)). Set5 and Set14 are smaller datasets with 5 and 14 images, respectively, with different SR challenges, while B100 and Urban100, with 100 images each, represent a wider range of natural and urban scenes which might be more representative of SR tasks in the wild.

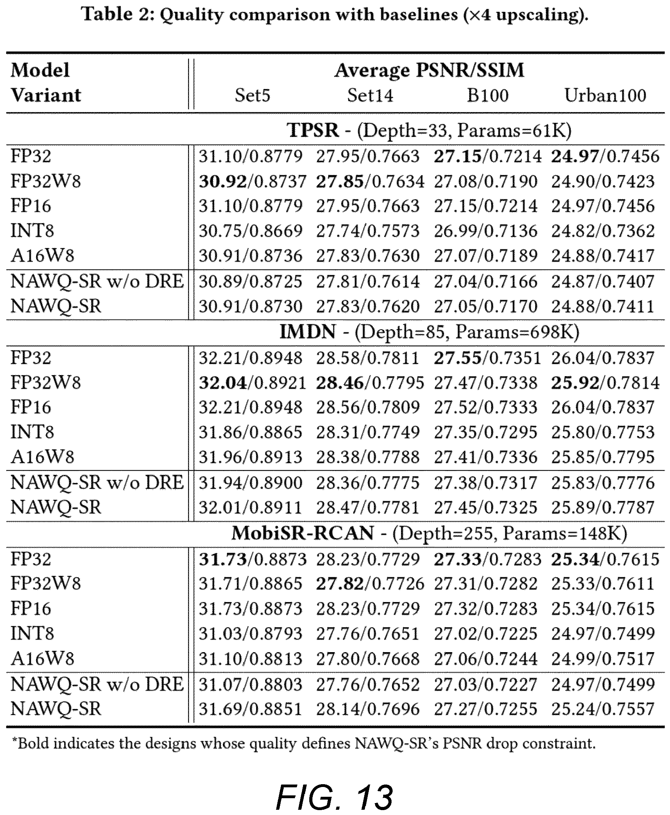

**NAWQ-SR Parameters.** NAWQ-SR exposes two parameters used for the exploration of the per-layer wordlengths and for the DRE layer selection - the quality drop tolerance ($\epsilon$) and the energy concentration threshold ($K$), respectively. Unless mentioned otherwise, the tolerance $\epsilon$ is set to 0.1. For the model-dataset pairs where weights quantization (FP32W8 in Table 2) leads to $\geq$ 0.1 dB PSNR drop with respect to the original model (FP32), the tolerance $\epsilon$ is considered with respect to FP32W8 (bold values in Table 2, shown in Figure 13). For the energy concentration threshold, the value of $K$ is tuned via grid search for each model-dataset pair. As such, $K$ was set to 0.125, 0.5 and 1.0, for IMDN, TPSR and MobiSR-RCAN, respectively.

**Evaluation of Wordlength Optimiser.** To evaluate the wordlength optimizer of the present techniques, Quant-SR-WLopt is compared with three heuristic optimizers: *1)* simulated annealing (SA) (S Kirkpatrick, CD Gelatt Jr, and MP Vecchi. 1983. Optimization by Simulated Annealing. Science 220, 4598 (1983), 671-680), *2)* genetic algorithm (GA) (Colin R. Reeves (Ed.). 1993. Modern Heuristic Techniques for Combinatorial Problems. John Wiley & Sons, Inc., USA), and *3)* random search (RS). The achieved BOPs reduction is compared with respect to A16W8 given a PSNR drop constraint of 0.1 dB *under the same search time budget,* across the evaluated SR DNNs and datasets B100 and Urban100. The runtime of QuantSR-WLopt is used as the search time budget and run each of the baselines 10 times on an Nvidia GTX1080Ti GPU, reporting the average best result in Table 1 (shown in Figure 11).

Figure 11 is a table showing results of experiments to evaluate the optimisation method. First, as the attainable BOPs reduction over A16W8 is bounded to a maximum of $2\times$, corresponding to INT8, it is observed that the achieved reductions of NAWQ-SR are very close to the peak performance, leaving little room for further improvement. Furthermore, QuantSR-WLopt consistently outperforms all baseline algorithms, yielding a BOPs gain between 16%-33% (21.8% geo. mean) over SA and 8%-34% (24.7% geo. mean) over GA. Finally, RS yielded designs that violated the PSNR constraint in the vast majority of runs and hence is omitted from Table 1.

All three baseline optimizers are iterative and can quickly determine the next candidate design point to evaluate. As such, these strategies would be suitable in cases where the objective function (BOPs and PSNR in our setting) is cheap to evaluate. Nevertheless, as PSNR is costly to evaluate and the design space is combinatorially large, the more structured search approach of the QuantSR-WLopt of the present techniques is more effective in yielding a hybrid-precision design that lies close to the theoretical maximum of $2\times$ BOPs reduction.

**Evaluation of Neural Image Codec. Runtime Overheads.** To evaluate the overhead of estimating new scale factors and zero points for each of the selected DRE layers, the inference time was measured, across 50 inferences, for each of the models with and without DRE enabled for these layers. Overall, across all DNNs, the average time overhead of running DRE was 4.26% (up to 6.40%) and 1.53% (up to 4.58%) for B100 and Urban100, respectively.

Another overhead introduced by NAWQ-SR's strategy and its respective dispatching policy is the cost of switching between partitions with distinct bitwidth representations (*i.e.* INT8 vs A16W8). To evaluate this, the switching times was measured across 50 inferences for each of the DNNs, using the partitions selected by NAWQ-SR. The average total partition switching overhead over the inference time across DNNs was 0.34% (up to 0.84%) and 1.04% (up to 2.41%), for B100 and Urban100, respectively, with an average latency overhead of $39.25\mu s$ (up to $53\mu s$) per partition.

**DRE Quality Gains.** Next, the contribution of DRE with respect to visual quality was assessed. For each model in Table 2 (Figure 13), the last two rows show the achieved PSNR before and after selectively applying DRE. Across all cases, the use of DRE yields higher quality, with significant gain of up to 0.02 dB (0.015 dB average) for TPSR, 0.11 dB (0.08 dB average) for IMDN and 0.62 dB (0.38 dB average) for MobiSR-RCAN, showcasing its effectiveness in increasing quality.

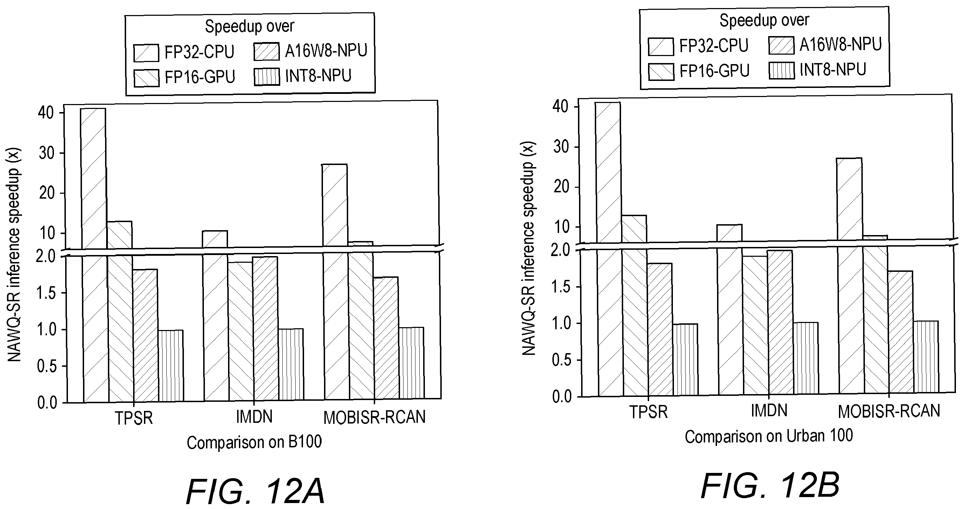

Overall, as seen in Figures 12 and 13, the Neural Image Codec presents a very reasonable overhead considering its latency and visual quality when compared to the fastest (INT8) and highest-quality (FP32) baselines.

**Comparison with Highly Optimised Status-Quo Baselines.** This section presents a comparison of NAWQ-SR with the following: an FP32-CPU, FP16-GPU, INT8-NPU and A16W8-NPU designs, obtained through SNPE. These represent highly optimized status-quo implementations targeting each of the available processors. Figure 13 presents the achieved quality and Figure 12 depicts the achieved speedup measured on SDM865 across models and datasets. The quality after quantizing only the weights (FP32W8) is also reported.

**Comparison to CPU/GPU Designs.** With respect to the floating-point designs (FP32/FP16), NAWQ-SR delivers quality within 0.1 dB of the original model's for the vast majority of cases. In cases where weights quantization has a significant impact on quality drop, *i.e.* FP32W8 leads to ≥0.1 dB drop over FP32 for Set5, Set14 and Urban100 in IMDN, the NAWQ-SR framework was optimized with a 0.1 dB tolerance with respect to FP32W8. This is achieved across all cases. With respect to latency, NAWQ-SR outperforms both CPU and GPU designs by up to $40.8\times$ ($22\times$ geo. mean across models and datasets) and $12.5\times$ ($5.5\times$ geo. mean) respectively.

**Comparison to NPU Designs.** With respect to the INT8-NPU design, NAWQ-SR yields higher PSNR with an average of 0.09 dB for TPSR, 0.12 dB for IMDN and 0.39 dB for MobiSR-RCAN across the datasets. On the latency front, NAWQ-SR is able to reach up to 98% of INT8-NPU processing speed, with a geometric mean of 96% across models and datasets, despite its use of hybrid precision. Compared to A16W8-NPU, the system of the present techniques outperforms its PSNR for IMDN and MobiSR-RCAN with an average improvement of 0.05 dB for IMDN and 0.35 dB for MobiSR-RCAN across datasets. For TPSR, generates mappings that either have slightly lower PSNR but still lie within the PSNR constraint with respect to FP32 (see B100), or meet the PSNR of A16W8-NPU. With respect to latency, as shown in Figure 12, NAWQ-SR provides up to $1.96\times$ faster execution than A16W8-NPU, with a geometric mean of $1.80\times$ across models and datasets. Overall, the results demonstrate how the hybrid-precision approach and the better utilization of the NPU's capabilities provided by the NAWQ-SR system enable the gap between the quality of floating-point designs and the speed of INT8 to be bridged, while pushing beyond A16W8's quality in several cases.

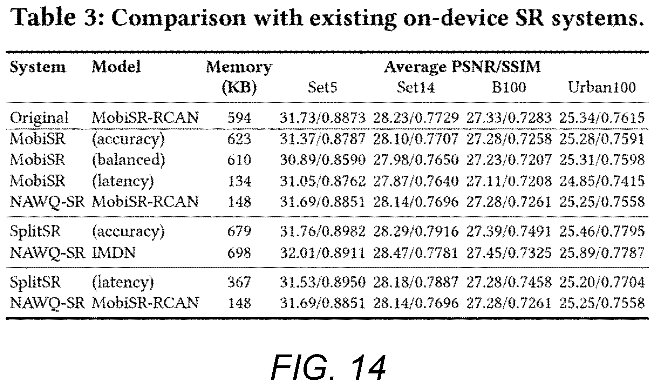

**Comparison with Existing On-Device SR Systems.** Here, the performance benefits of NAWQ-SR with respect to the current state-of-the-art on-device SR systems, MobiSR and SplitSR (Xin Liu, Yuang Li, Josh Fromm, Yuntao Wang, Ziheng Jiang, Alex Mariakakis, and Shwetak Patel. 2021. SplitSR: An End-to-End Approach to Super-Resolution on Mobile Devices. Proc. ACM Interact. Mob. Wearable Ubiquitous Technol. (IMWUT) (2021)) are presented - see Figure 14. Both systems base their design on the residual channel attention network (RCAN). RCAN consists of a series of *residual groups,* each containing a number of residual channel attention blocks. As RCAN exhibits excessive computational and memory demands, MobiSR and SplitSR modify RCAN's architecture to obtain variants with different accuracy-latency trade-offs. consider breaking comparisons into subsections and make the bullet points textbf

**Comparison with MobiSR.** MobiSR employs two models that are parallelized across the heterogeneous processors of the target device. The computationally heavier model is run on the CPU and GPU and the lightweight one on the DSP/NPU. MobiSR's scheduler divides the input image into patches and feeds them to each model-processor pair based on their difficulty; more difficult-to-upscale patches are sent for rapid processing to the DSP/NPU and easier patches are directed to the CPU and GPU in a load-balancing manner. In the MobiSR paper mentioned above, three system configurations are presented, each optimized for a different objective:

- **MobiSR-accuracy:** The accuracy-optimized model pair, denoted by ($m_{ref} + m_{clc}$) in the MobiSR paper. $m_{ref}$ denotes the original MobiSR-RCAN architecture. $m_{clc}$ employs group convolutions and channel-shuffle layers to reduce the computational complexity of the original MobiSR-RCAN.
- **MobiSR-balanced:** The accuracy-latency balanced model pair, denoted by ($m_{ref} + m_{s2}$) in the MobiSR paper. The compact model $m_{s2}$ goes beyond the channel shuffling of $m_{clc}$ and introduces channel splitting and depthwise-separable convolutions to further improve latency.
- **MobiSR-latency:** The latency-optimized model pair, denoted by ($m_{clc} + m_{s2}$) in the MobiSR paper. This model pair combines the complexity-reduction techniques of the high-accuracy and balanced model pairs, delivering fast processing at the expense of degraded visual quality.

Furthermore, MobiSR introduces a parameter named total-variation (TV) threshold that tunes the accuracy-latency trade-off of each pair of models. To perform a fair comparison against MobiSR, the TV threshold of each MobiSR variant is tuned, so that it meets 0.1 dB PSNR drop with respect to the original MobiSR-RCAN. As such, TV is set to < 8,8,6,6 > for Set5, Set14, B100 and Urban100 for MobiSR-accuracy, < 8,8,6,8 > for MobiSR-balanced and to 10 for all datasets for MobiSR-latency. Accordingly, NAWQ-SR is applied over MobiSR-RCAN with the same PSNR drop tolerance.

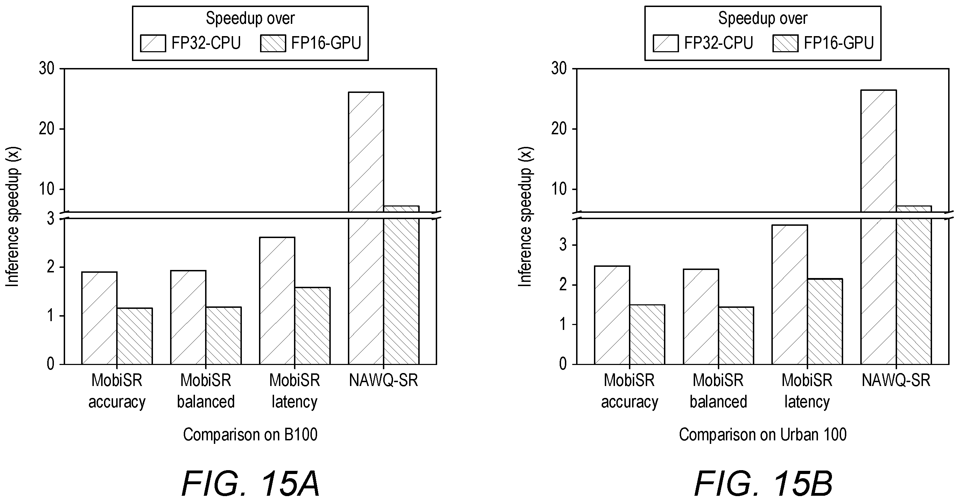

Figure 15 depicts the actual speedup achieved by MobiSR and over highly optimized CPU and GPU implementations on B100 and Urban100. With respect to the CPU, NAWQ-SR outperforms MobiSR yielding up to $13.4\times$ and $5.9\times$ higher speedup for B100 over the CPU and GPU mapping, respectively. Similarly, targeting Urban100, NAWQ-SR achieves up to $11.1\times$ and $4.9\times$ higher speedup over MobiSR compared to the CPU and GPU implementations, respectively. Due to MobiSR's approach of quantizing the compact DNN that runs on the device's DSP/NPU, MobiSR has to compensate for the PSNR drop by scheduling a significant portion of patches to the expensive CPU- and GPU-pinned model. Instead, through the combination of hybrid-precision execution and the DRE technique, NAWQ-SR alleviates the destructive effect of quantization on quality and enables the fast processing of all patches on the NPU. Overall, NAWQ-SR achieves an average speedup improvement of $7.93\times$ ($7.17\times$ geo. mean) across models and datasets.without degrading visual quality.

**Comparison with SplitSR.** SplitSR introduces a compact residual block, named SplitSRBlock, and modifies RCAN to allow for a configurable accuracy-computational cost trade-off, using a single model. Two system configurations were presented in the SplitSR paper mentioned above, optimized for different targets:

- **SplitSR-accuracy:** The accuracy-optimized model, composed of 7 residual groups, each with 7 residual blocks.

- **SplitSR-latency:** The latency-optimized model, composed of 5 residual blocks, each containing 6 residual blocks.

Moreover, SplitSR is optimized for execution on mobile CPUs through the TVM compiler. To compare against SplitSR, we impose a PSNR constraint within 0.05 dB of the PSNR achieved by each SplitSR variant and select the model that satisfies it for each dataset. As such, IMDN and MobiSR-RCAN are selectedto compare with the accuracy- and latency-driven SplitSR designs, respectively (Table 3 in Figure 14).

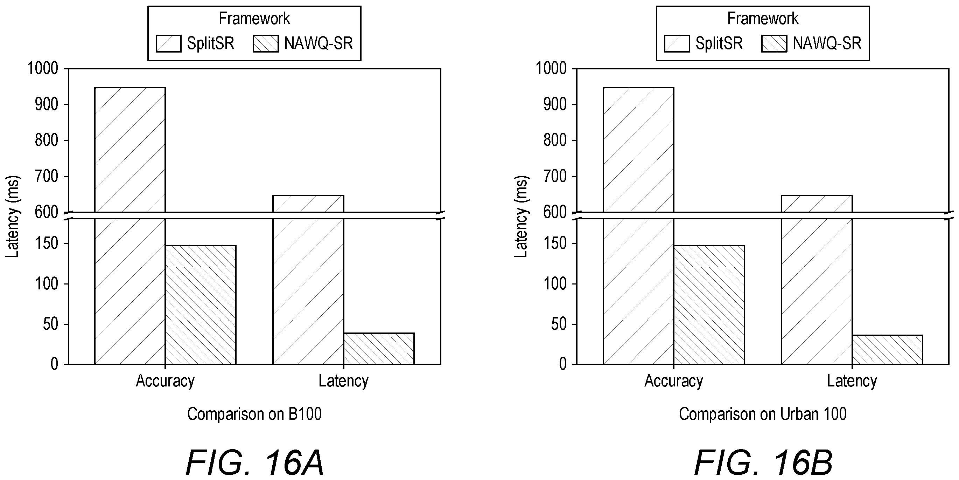

Figure 16 shows the measured latency of SplitSR and NAWQ-SR on B100 and Urban100. On the accuracy-driven designs, NAWQ-SR improves latency by $1.60\times$ and $1.59\times$ on B100 and Urban100, respectively. On latency-driven designs, NAWQ-SR demonstrates a performance gain of $4.37\times$ and $4.40\times$ over SplitSR on B100 and Urban100, respectively. As a result, although SplitSR effectively combines a lightweight model design together with compiler optimizations to achieve significant speedup, it still relies on CPU execution, remaining bounded by the performance of floating-point processors. On the other hand, NAWQ-SR's hybrid precision and optimized utilization of the NPU's processing units avoids the inefficiencies of floating-point execution and reaches higher raw performance over the highly optimized CPU-based SplitSR.

**Energy Consumption.** Next, the energy consumption of NAWQ-SR's NPU-optimized hybrid-precision execution is compared against the status-quo of CPU/GPU/NPU execution. To this end, 50 images were processed using TPSR and MobiSR-RCAN, separately, for each of the execution strategies. The images are pre-hosted on the device, representing the scenario in which a user would have a pre-downloaded content (such as a video) which is then enhanced with on-device SR and visualized in high resolution. Energy consumption was measured with the Monsoon power monitor at a sampling period of $200\mu$s.

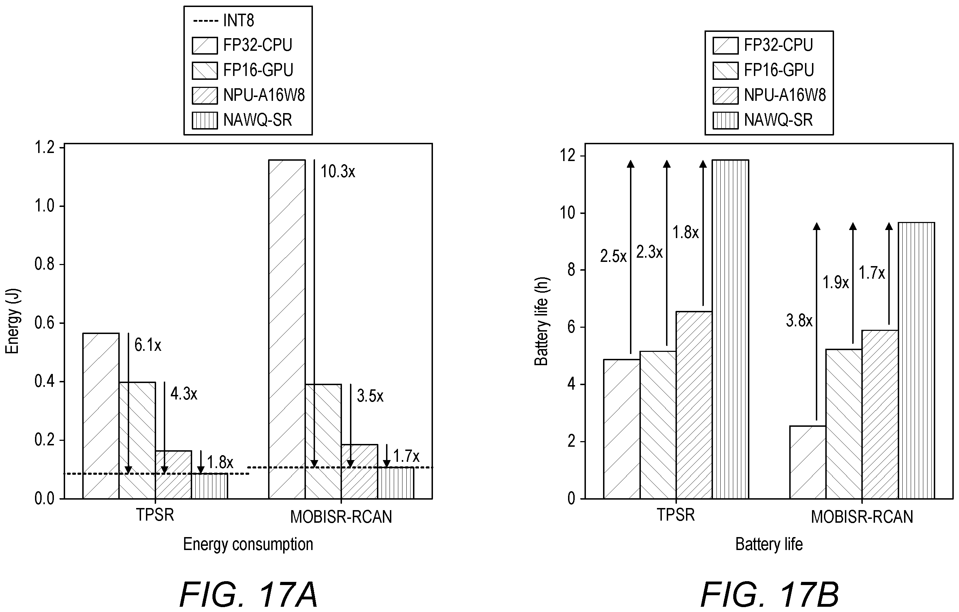

Figure 17 shows the average energy consumption for the two models when upscaling to 720p images. In this case, the average idle energy is subtracted when the screen is on. It is observed that NAWQ-SR's NPU-optimized execution results in significant energy savings compared to the FP32 CPU execution, with an average 6.1 $\times$ and 10.3 $\times$ reduction per model. This result motivates the adoption of NPU-optimized frameworks in comparison to state-of-the-art CPU-centric on-device SR approaches, such as SplitSR. Furthermore, a significant 3.5 $\times$-4.3 $\times$ and 1.7 $\times$-1.8 $\times$ energy reduction is seen, even when compared to the more efficient compute units, FP16 GPU and A16W8 NPU execution, respectively.

Figure 17 also estimates the battery life when a user continuously watches SR-enhanced video with 1080p frames on a device with 4000mAh, a common battery capacity for recent mobile devices (*e.g.* Samsung S20). In this case, the total energy is measured, including the screen consumption. It is seen that NAWQ-SR greatly prolongs the device's battery life, with up to 3.8 $\times$, 2.3 $\times$ and 1.8 $\times$ battery life extension when compared to CPU, GPU and A16W8 NPU execution, respectively. This result highlights the potential for existing state-of-the-art end-to-end on-device SR systems, such as NEMO, which are bounded to GPU-based execution due to visual quality constraints, to integrate NAWQ-SR as a means of improving not only latency and visual quality as described above, but also extending the device's battery life.

The NAWQ-SR framework introduces both algorithmic and system optimization techniques to achieve state-of-the-art SR on mobile NPUs. The experiments show that the proposed hybrid-precision wordlength optimization method can efficiently scale to SR models of varying computational complexity, enabling NAWQ-SR to be applicable to any given SR model. The run-time adaptive precision technique can be effectively deployed in existing commercial NPUs by means of NAWQ-SR's neural image codec, resulting in quality gains with minimal overhead.

As a stand-alone framework, NAWQ-SR surpasses the performance of existing on-device SR systems, overcoming their limitations and significantly mitigating the quality drawbacks of executing SR DNNs on low-precision units. Additionally, NAWQ-SR can be orthogonally combined with existing frameworks to obtain further gains, by either enabling them to target NPUs, e.g. for the CPU-based SplitSR and GPU-based NEMO, or with better utilization of the NPU resources, e.g. for MobiSR's NPU-mapped compact model.

Those skilled in the art will appreciate that while the foregoing has described what is considered to be the best mode and where appropriate other modes of performing present techniques, the present techniques should not be limited to the specific configurations and methods disclosed in this description of the preferred embodiment. Those skilled in the art will recognise that present techniques have a broad range of applications, and that the embodiments may take a wide range of modifications without departing from any inventive concept as defined in the appended claims.

## Claims

1.  A computer-implemented method for optimising a neural network for implementation on a processing unit, the method comprising:

    obtaining a pre-trained neural network for performing image processing on images, the neural network comprising a plurality of layers;
    quantising an activations tensor of each layer of the pre-trained neural network using a uniform wordlength and a per-layer scale factor;
    determining, for each layer, whether to keep the activations tensor quantised using the uniform wordlength or to switch to using a new wordlength that is supported by the processing unit to quantise the activations tensor; and
    quantising, using the determined wordlength, the activations tensor of each layer, and thereby generating a hybrid-precision neural network optimised for implementation on the processing unit.

2.  The method as claimed in claim 1 wherein quantising an activations tensor of each layer comprises deriving, for each layer, a scale factor based on an estimated dynamic range of the activations tensor for the layer.

3.  The method as claimed in claim 1 or 2 further comprising:

obtaining a user-defined minimum quality threshold value for the super-resolution, and
using the minimum quality threshold value to determine whether to keep using the uniform wordlength or to switch to using a new wordlength to quantise the activations tensor of each layer.

4. The method as claimed in claim 1, 2 or 3 further comprising determining a computational cost in terms of a number of bit operations, BOPs, associated with each layer;
wherein determining whether to keep the uniform wordlength comprises prioritising quantisation of layers of the neural network that have a high computational cost.

5. The method as claimed in claim 4 wherein determining whether to keep the uniform wordlength comprises:
keeping the uniform wordlength or switching to a new wordlength by identifying, for each layer, which wordlength supported by the processing unit minimises the computational cost of an operation performed by the layer on the processing unit while maintaining the minimum quality threshold value.

6. The method as claimed in claim 4 or 5 wherein the identifying comprises:

   ordering each quantised layer based on the number of bit operations, BOPs, associated with the layer;
   temporarily adjusting the wordlength used to quantise the activations tensor of a I-th layer to a lower-precision wordlength;
   determining whether a minimum quality threshold value is satisfied; and
   setting the wordlength to quantise the activations tensor of the I-th layer to the lower-precision wordlength when the minimum quality threshold value is determined to be satisfied.

7. The method as claimed in claim 6 further comprising repeating the adjusting, determining and ordering steps for each layer of the neural network.

8. The method as claimed in any preceding claim further comprising:
identifying one or more quantised layers of the neural network to be further quantised at runtime based on a dynamically derived scale factor applied to the activations tensor of the identified quantised layers.

9. The method as claimed in claim 8 wherein identifying one or more quantised layers of the neural network to be further quantised at runtime comprises:
determining a resilience of each quantised layer of the neural network to low precision.

10. The method as claimed in claim 9 wherein determining a resilience of each quantised layer comprises:

    calculating a degradation in a peak signal-to-noise ratio value caused by each quantised layer;
    ordering each quantised layer in a list sorted by a decreasing order of degradation;
    calculating an energy concentration of a subset of quantised layers up to a I-th layer in the list;
    selecting one or more quantised layers up to the I-th layer that satisfy an energy concentration threshold; and
    specifying that the selected quantised layers will be further quantised by having their scale factors dynamically derived at runtime.

11. The method as claimed in claim 10 further comprising repeating the calculating, selecting and specifying steps for each quantised layer in the list.

12. A computer-implemented method for using an optimised super-resolution deep neural network, DNN, on a processing unit to perform super-resolution, the method comprising:

    obtaining at least one low resolution image; and
    using the optimised DNN to:

       divide the low resolution image into fixed-size patches to be upscaled;
       upscale a resolution of each fixed-size patch using the optimised DNN, wherein each layer of the optimised DNN has a quantised activations tensor that is either pre-defined or determined using dynamic range estimation at run-time;
       concatenate the upscaled patches to form a super-resolution image; and
       output the super-resolution image.

**13.** The method as claimed in claim 12 wherein processing each fixed-size patch using the optimised DNN comprises:

partitioning the DNN into groups of consecutive layers based on an associated wordlength of each layer and whether the quantised activations tensors are pre-defined or determined at run-time;
scheduling execution of partitions of the DNN that have layers with pre-defined quantised activations tensors without supervision; and
scheduling execution of partitions of the DNN that have layers with quantised activations tensors determined at run-time, wherein the scheduling is monitored to quantise the activations tensors at runtime.

**14.** The method as claimed in claim 13 wherein quantising the activations tensors at runtime comprises:

extracting minimum and maximum values from an input tensor of each layer;
using the extracted minimum and maximum values to compute a scale factor for each layer; and
quantising the activations tensor for each layer using the computed scale factor.

**15.** A computer program product comprising instructions which, when the program is executed by a processor, causes the processor to carry out the methods of any of claims 1 to 14.

FIG. 1

FIG. 2

**Algorithm 1:** NPU-centric Hybrid-Precision Wordlength Optimization (QuantSR-WLopt)

**Input:** DNN $m$ with layers $\mathcal{L}$
Wordlengths set $\mathcal{W} = \{8, 16\}$
Calibration set $\mathcal{D}_{\text{calib}}$
Reference quality $q_{\text{ref}}$ (PSNR in dB or SSIM in $[-1, 1]$)
Quality drop tolerance $\epsilon$
**Output:** Optimized wordlength vector $b^{\text{sel}} \in \mathcal{W}^{|\mathcal{L}|}$

1   $u \leftarrow$ minimum uniform wordlength satisfying quality drop constraint (in our case 16b)
2   $b_l \leftarrow u \quad \forall l \in \{0, ..., |\mathcal{L}| - 1\}$
3   InitScales&ZeroPoints($m(b), \mathcal{D}_{\text{calib}}$)
4   $c_{\text{total}}^{\text{bops}}, c_{\text{layers}}^{\text{bops}} \leftarrow$ GetBOPs($m(b)$)       // Initial cost
5   $c_{\text{layers}}^{\text{sorted}}, \mathcal{L}_{\text{bops}}^{\text{sorted}} \leftarrow$ SortDescending($c_{\text{layers}}^{\text{bops}}$)
6   $b^{\text{sel}} \leftarrow b$
7   **foreach** $l$ in $\mathcal{L}_{\text{bops}}^{\text{sorted}}$ **do** // Single-shot pass through the layers
8     $b \leftarrow b^{\text{sel}}$
9     $b_l \leftarrow 8$
10    UpdateScale&ZeroPoint($b_l$)       // Using Eq. (2)
11    $q \leftarrow$ GetQuality($m(b), \mathcal{D}_{\text{calib}}$)
12    $c^{\text{bops}} \leftarrow$ GetBOPs($m(b)$)
13    **if** $q_{\text{ref}} - q \leq \epsilon$ **then**       // Quality constraint
14      $b_l^{\text{sel}} \leftarrow 8$
15      $q_{\text{best}} \leftarrow q$
16      $c_{\text{min}}^{\text{bops}} \leftarrow c^{\text{bops}}$
17    **end**
18 **end**

## FIG. 3A

A16W8　　A16W8　　A16W8　　A16W8

FLOPS rank:　　#4　　#2　　#1　　#3

## FIG. 3B

A16W8　　A16W8　　**A8**W8　　A16W8

FLOPS rank:　　#4　　#2　　#1　　#3

Quantiser

## FIG. 3C

A16W8　　**A8**W8　　**A8**W8　　A16W8

FLOPS rank:　　#4　　#2　　#1　　#3

Quantiser

## FIG. 3D

A16W8    A16W8    A8W8    A8W8

FLOPS rank:    #4    #2    #1    #3

Quantiser

## FIG. 3E

A8W8    A16W8    A8W8    A8W8

FLOPS rank:    #4    #2    #1    #3

Quantiser

## FIG. 3F

---

**Algorithm 2:** Layerwise Resilience Analysis (LRA)

---

**Input:** DNN $m$ with layers $\mathcal{L}$

Wordlengths set $\mathcal{W} = \{8, 16\}$

Quality drop $q_{\text{w-quant}}^{\text{drop}}$ of 8b weights-quantized DNN

Reference quality $q_{\text{ref}}$ (PSNR in dB or SSIM in $[-1, 1]$)

**Output:** Sorted layers with respect to quality drop $\mathcal{L}_{\text{drop}}^{\text{sorted}}$

Sorted layerwise quality drops $q_{\text{sorted}}^{\text{drop}}$

1  $q_{\text{ref}} \leftarrow q_{\text{ref}} - q_{\text{w-quant}}^{\text{drop}}$  // Remove quality drop due to 8b weights

2  $u \leftarrow$ minimum uniform wordlength satisfying
   quality drop constraint (in our case 16b)

3  **foreach** $l$ **in** $\mathcal{L}$ **do**                 // for each layer

4      $w \leftarrow u$

5      $w_l \leftarrow 8$

6      $q \leftarrow \text{GetQuality}(m(w))$

7      $q_l^{\text{drop}} \leftarrow q_{\text{ref}} - q$

8  **end**

9  $q_{\text{sorted}}^{\text{drop}}, \mathcal{L}_{\text{drop}}^{\text{sorted}} \leftarrow \text{SortDescending}(q^{\text{drop}})$

---

*FIG. 4A*

A16W8     A16W8     A16W8     **A8**W8

PSNR drop = PNSR(FP32) - PNSR(current) = **0.01** dB     PSNR drop = [0.02 0.01 0.04 **0.01**]

*FIG. 4B*

---

**Algorithm 3:** DRE Layer Selection

---

**Input:** Hybrid-precision DNN $m_q$ with layers $\mathcal{L}$

Sorted layers with respect to quality drop $\mathcal{L}_{\text{drop}}^{\text{sorted}}$

Sorted layerwise quality drops $q_{\text{sorted}}^{\text{drop}}$

Energy concentration threshold $K \in [0, 1]$

**Output:** DRE-augmented quantized model $m_q^{\text{DRE}}$

---

**for** $l \leftarrow 0$ **to** $|\mathcal{L}| - 1$ **do**          `// loop through sorted layers`

$\quad E_l \leftarrow \sum\limits_{i=0}^{l-1} |q_{\text{sorted},l}^{\text{drop}}|^2$   `// Energy concentration up to layer l`

**end**

**for** $l \leftarrow 0$ **to** $|\mathcal{L}| - 1$ **do**          `// loop through sorted layers`

$\quad$ **if** $E_l \,/\, E_{|\mathcal{L}|-1} \leq K$ **then**          `// Energy constraint`

$\qquad \mathcal{L}_{\text{DRE}} \leftarrow \text{Append}\big( \mathcal{L}_{\text{drop}}^{\text{sorted}}(l) \big)$

$\quad$ **end**

**end**

$m_q^{\text{DRE}} \leftarrow \text{AddDRE}(m, \mathcal{L}_{\text{DRE}})$   `// Use DRE to the most sensitive`

                                               `// layers based on threshold K`

---

*FIG. 5A*

*FIG. 5B*

Neural Network (NN) Optimisation

Obtaining a pre-trained NN comprising a plurality of layers S100

Quantising an activations tensor of each layer using a uniform wordlength and a per-layer scale factor S102

Per layer: keep uniform wordlength or switch to new wordlength? S104

Yes

No

Quantise the activations tensor of the layer using uniform wordlength S106

Quantise the activations tensor of the layer using new wordlength S108

FIG. 6

## Wordlength optimisation

Ordering each quantised layer based on a
number of BOPs S200

Adjusting the wordlength used to quantise the
activations tensor of a specific layer to a lower-
precision wordlength S202

Minimum quality
threshold met?
S204

yes                    no

Set wordlength used
to quantise
activations tensor of
specific layer to
lower-precision
wordlength S206

Restore original
wordlength used to
quantise activations
tensor of specific
layer S208

*FIG. 7*

Dynamic range adaptation

Calculating a degradation in a peak signal-to-noise ratio caused by each quantised layer S300

↓

Ordering each quantised layer in a list sorted by a decreasing order of degradation S302

↓

Calculating an energy concentration of a subset of quantised layers up to a specific layer in the list S304

↓

Selecting one or more quantised layers up to the specific layer that satisfy an energy concentration threshold S306

↓

Specifying that the selected quantised layers will have their scale factors dynamically derived at runtime S308

## *FIG. 8*

## Inference / Run-Time

```
┌─────────────────────────────────────────────────┐
│       Obtaining at least one LR image S400        │
└─────────────────────────────────────────────────┘
                         │
                         ▼
┌─────────────────────────────────────────────────┐
│   Dividing LR image into fixed-size patches S402  │
└─────────────────────────────────────────────────┘
                         │
                         ▼
┌─────────────────────────────────────────────────┐
│  Process each fixed-size patch using optimised    │
│  ML model, where each layer uses pre-defined      │
│  quantised activations tensors or quantised       │
│  activations tensors determined at runtime        │
│                      S404                         │
└─────────────────────────────────────────────────┘
                         │
                         ▼
┌─────────────────────────────────────────────────┐
│      Concatenate processed patches to form a      │
│          super-resolution image S406              │
└─────────────────────────────────────────────────┘
                         │
                         ▼
┌─────────────────────────────────────────────────┐
│     Output the super-resolution image S408        │
└─────────────────────────────────────────────────┘
```

*FIG. 9*

Apparatus 100

Processor(s) 102

Memory 104

Optimised ML Model
106

Image Capture
Device 108

Interface(s) 110

Storage 112

## FIG. 10

## Table 1: QuantSR-WLopt vs. Heuristic Optimizers

| Model | Layers | Dataset | Target PSNR Drop | Search Time | BOPs Reduction | | |
|---|---|---|---|---|---|---|---|
| | | | | | WLopt | SA | GA |
| TPSR | 33 | B100 | 0.1 dB | 2.1 min | 1.96× | 1.68× | 1.59× |
| TPSR | 33 | Urban100 | 0.1 dB | 9.6 min | 1.83× | 1.37× | 1.69× |
| IMDN | 85 | B100 | 0.1 dB | 9.4 min | 1.93× | 1.66× | 1.44× |
| IMDN | 85 | Urban100 | 0.1 dB | 22 min | 1.93× | 1.67× | 1.57× |
| MobiSR-RCAN | 255 | B100 | 0.1 dB | 72 min | 2.00× | 1.72× | 1.56× |
| MobiSR-RCAN | 255 | Urban100 | 0.1 dB | 177 min | 2.00× | 1.49× | 1.50× |

## FIG. 11

*FIG. 12B*

*FIG. 12A*

**Table 2: Quality comparison with baselines (×4 upscaling).**

| Model | Average PSNR/SSIM | | | |
|---|---|---|---|---|
| Variant | Set5 | Set14 | B100 | Urban100 |
| **TPSR - (Depth=33, Params=61K)** | | | | |
| FP32 | 31.10/0.8779 | 27.95/0.7663 | **27.15**/0.7214 | **24.97**/0.7456 |
| FP32W8 | **30.92**/0.8737 | **27.85**/0.7634 | 27.08/0.7190 | 24.90/0.7423 |
| FP16 | 31.10/0.8779 | 27.95/0.7663 | 27.15/0.7214 | 24.97/0.7456 |
| INT8 | 30.75/0.8669 | 27.74/0.7573 | 26.99/0.7136 | 24.82/0.7362 |
| A16W8 | 30.91/0.8736 | 27.83/0.7630 | 27.07/0.7189 | 24.88/0.7417 |
| NAWQ-SR w/o DRE | 30.89/0.8725 | 27.81/0.7614 | 27.04/0.7166 | 24.87/0.7407 |
| NAWQ-SR | 30.91/0.8730 | 27.83/0.7620 | 27.05/0.7170 | 24.88/0.7411 |
| **IMDN - (Depth=85, Params=698K)** | | | | |
| FP32 | 32.21/0.8948 | 28.58/0.7811 | **27.55**/0.7351 | 26.04/0.7837 |
| FP32W8 | **32.04**/0.8921 | **28.46**/0.7795 | 27.47/0.7338 | **25.92**/0.7814 |
| FP16 | 32.21/0.8948 | 28.56/0.7809 | 27.52/0.7333 | 26.04/0.7837 |
| INT8 | 31.86/0.8865 | 28.31/0.7749 | 27.35/0.7295 | 25.80/0.7753 |
| A16W8 | 31.96/0.8913 | 28.38/0.7788 | 27.41/0.7336 | 25.85/0.7795 |
| NAWQ-SR w/o DRE | 31.94/0.8900 | 28.36/0.7775 | 27.38/0.7317 | 25.83/0.7776 |
| NAWQ-SR | 32.01/0.8911 | 28.47/0.7781 | 27.45/0.7325 | 25.89/0.7787 |
| **MobiSR-RCAN - (Depth=255, Params=148K)** | | | | |
| FP32 | **31.73**/0.8873 | 28.23/0.7729 | **27.33**/0.7283 | **25.34**/0.7615 |
| FP32W8 | 31.71/0.8865 | **27.82**/0.7726 | 27.31/0.7282 | 25.33/0.7611 |
| FP16 | 31.73/0.8873 | 28.23/0.7729 | 27.32/0.7283 | 25.34/0.7615 |
| INT8 | 31.03/0.8793 | 27.76/0.7651 | 27.02/0.7225 | 24.97/0.7499 |
| A16W8 | 31.10/0.8813 | 27.80/0.7668 | 27.06/0.7244 | 24.99/0.7517 |
| NAWQ-SR w/o DRE | 31.07/0.8803 | 27.76/0.7652 | 27.03/0.7227 | 24.97/0.7499 |
| NAWQ-SR | 31.69/0.8851 | 28.14/0.7696 | 27.27/0.7255 | 25.24/0.7557 |

*Bold indicates the designs whose quality defines NAWQ-SR's PSNR drop constraint.

## FIG. 13

# Table 3: Comparison with existing on-device SR systems.

| System | Model | Memory (KB) | Average PSNR/SSIM | | | |
|---|---|---|---|---|---|---|
| | | | Set5 | Set14 | B100 | Urban100 |
| Original | MobiSR-RCAN | 594 | 31.73/0.8873 | 28.23/0.7729 | 27.33/0.7283 | 25.34/0.7615 |
| MobiSR | (accuracy) | 623 | 31.37/0.8787 | 28.10/0.7707 | 27.28/0.7258 | 25.28/0.7591 |
| MobiSR | (balanced) | 610 | 30.89/0.8590 | 27.98/0.7650 | 27.23/0.7207 | 25.31/0.7598 |
| MobiSR | (latency) | 134 | 31.05/0.8762 | 27.87/0.7640 | 27.11/0.7208 | 24.85/0.7415 |
| NAWQ-SR | MobiSR-RCAN | 148 | 31.69/0.8851 | 28.14/0.7696 | 27.28/0.7261 | 25.25/0.7558 |
| SplitSR | (accuracy) | 679 | 31.76/0.8982 | 28.29/0.7916 | 27.39/0.7491 | 25.46/0.7795 |
| NAWQ-SR | IMDN | 698 | 32.01/0.8911 | 28.47/0.7781 | 27.45/0.7325 | 25.89/0.7787 |
| SplitSR | (latency) | 367 | 31.53/0.8950 | 28.18/0.7887 | 27.28/0.7458 | 25.20/0.7704 |
| NAWQ-SR | MobiSR-RCAN | 148 | 31.69/0.8851 | 28.14/0.7696 | 27.28/0.7261 | 25.25/0.7558 |

# FIG. 14

**FIG. 15A**

**FIG. 15B**

FIG. 16A

FIG. 16B

**FIG. 17A**

**FIG. 17B**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ROYSON LEE ; L. DUDZIAK ; M. ABDELFATTAH ; STYLIANOS I. VENIERIS ; H. KIM ; HONGKAI WEN ; N. LANE.** Journey Towards Tiny Perceptual Super-Resolution. *European Conference on Computer Vision (ECCV).,* 2020
- **ZHENG HUI ; X. GAO ; YUNCHU YANG ; X. WANG.** Lightweight Image Super-Resolution with Information Multi-distillation Network. *Proceedings of the 27th ACM International Conference on Multimedia,* 2019
- **YULUN ZHANG ; KUNPENG LI ; KAI LI ; LICHEN WANG ; BINENG ZHONG ; YUN FU.** Image Super-Resolution Using Very Deep Residual Channel Attention Networks. *European Conference on Computer Vision (ECCV),* 2018
- **ROYSON LEE ; STYLIANOS I. VENIERIS ; L. DUDZIAK ; S. BHATTACHARYA ; N. LANE.** MobiSR: Efficient On-Device Super-Resolution through Heterogeneous Mobile Processors. *The 25th Annual International Conference on Mobile Computing and Networking (MobiCom),* 2019
- **R. TIMOFTE et al.** NTIRE 2017 Challenge on Single Image Super-Resolution: Methods and Results. *IEEE Conference on Computer Vision and Pattern Recognition Workshops (CVPRW),* 2017
- **MARCO BEVILACQUA ; ALINE ROUMY ; CHRISTINE GUILLEMOT ; MARIE LINE ALBERI MOREL.** Low-Complexity Single-Image Super-Resolution based on Nonnegative Neighbor Embedding. *British Machine Vision Conference (BMVC),* 2012
- **JIANCHAO YANG ; JOHNWRIGHT ; THOMAS S. HUANG ; YI MA.** Image Super-resolution via Sparse Representation. *Trans. Img. Proc.,* 2010, vol. 19 (11), 2861-2873
- **D. MARTIN ; C. FOWLKES ; D. TAL ; J. MALIK.** A database of human segmented natural images and its application to evaluating segmentation algorithms and measuring ecological statistics. *IEEE International Conference on Computer Vision (ICCV),* 2001
- **J. HUANG ; A. SINGH ; N. AHUJA.** Single image super-resolution from transformed self-exemplars. *IEEE Conference on Computer Vision and Pattern Recognition (CVPR),* 2015
- **S KIRKPATRICK ; CD GELATT JR ; MP VECCHI.** Optimization by Simulated Annealing. *Science,* 1983, vol. 220 (4598), 671-680
- Modern Heuristic Techniques for Combinatorial Problems. John Wiley & Sons, Inc, 1993
- **XIN LIU ; YUANG LI ; JOSH FROMM ; YUNTAO WANG ; ZIHENG JIANG ; ALEX MARIAKAKIS ; SHWETAK PATEL.** SplitSR: An End-to-End Approach to Super-Resolution on Mobile Devices. *Proc. ACM Interact. Mob. Wearable Ubiquitous Technol. (IMWUT),* 2021